(19) Europäisches Patentamt
European Patent Office
Office européen des brevets

(11) **EP 4 456 602 A2**

(12) **EUROPEAN PATENT APPLICATION**

(43) Date of publication:
**30.10.2024  Bulletin 2024/44**

(21) Application number: **24172759.3**

(22) Date of filing: **26.04.2024**

(51) International Patent Classification (IPC):
***H04W 28/08*** *(2023.01)*

(52) Cooperative Patent Classification (CPC):
**H04W 28/0958; H04W 28/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.04.2023  IN 202321030170**
**24.04.2024  US 202418644203**

(71) Applicant: **Mavenir Systems, Inc.**
**Richardson, TX 75081 (US)**

(72) Inventors:
• **PRASAD, Giri**
  **Bengaluru (IN)**

• **TANEJA, Mukesh**
  **560037 Bangalore (IN)**
• **KAIMALETTU, Sunil**
  **Bengaluru (IN)**
• **SAYEE, Kompalli Chakravartula Kalyana Rama Sesha**
  **Bengaluru (IN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD AND SYSTEM FOR DATA ROUTING FOR SPLIT-BEARER AT A CELLULAR BASE STATION FOR A DUAL CONNECTIVITY NETWORK ARCHITECTURE**

(57)     Systems and methods for updating a UL split threshold for a 4G leg and 5G leg for split Data Radio Bearers (DRBs). A dynamic splitting solution can be implemented at 5G CU-UP, 5G DU, 4G DU, or other equivalent nodes. An interleaving approach at CU-UP minimizes Packet Data Convergence Protocol (PDCP) reordering at CU-UP. A Near-RT RIC-based approach for an exchange of relevant parameters via an E2 interface can be run at a Near-RT RIC server.

<u>100</u>

| NR UE (101) | | NR gNB (106) | |
|---|---|---|---|
| Circuitry (102) | Uu Interface (120) | Circuitry (107) | |

Programmable Circuit (102A)
Processor (103)
Memory (104)
Module (105)

Programmable Circuit (107A)
Processor (108)
Memory (109)
Module (110)

Storage Device (130)

**FIG. 1**

EP 4 456 602 A2

**Description**

**DESCRIPTION OF THE RELATED TECHNOLOGY**

a. Field of the Disclosure

The present disclosure relates to systems and methods for radio access networks. The present disclosure is related to the design of operation, administration and management of various network elements of 4G, 5G, and further generations of a radio system.

**OVERVIEW OF IMPLEMENTATIONS**

Described are implementations of a computer system, computer system components, a method, and computer program products configured to execute program instructions for the method for radio access network, and operation, administration and management of various network elements of 4G, 5G, and further generations of the radio access network system. The method is performed by a computer system that comprises one or more processors and a computer-readable storage medium encoded with instructions executable by at least one of the processors and operatively coupled to at least one of the processors.

In an implementation, method comprises:

obtaining a LTE Downlink Data Delivery Status (DDDS) at a gNB node centralized unit (gNB CU-UP) via a 4G leg from an LTE DU (MeNB DU);
obtaining a NR DDDS at the gNB CU-UP via a 5G leg from a SgNB DU;
computing an intermediate factor for a final split factor, the intermediate factor being computed from Desired Buffer Size (DBS) parameters in the LTE DDDS message and the NR DDDS message;
computing the final split factor or a scheduling method for dynamic splitting and routing of DL Packet Data Convergence Protocol (PDCP) Protocol Data Units PDUs on a 4G leg and a 5G leg; and
routing the PDCP PDUs on the 4G leg, the 5G leg, or both based on the split factor calculation. The method can further comprise:

setting an LTE DBS for a data radio bearer (DRB) equal to the DBS in the LTE DDDS from the 4G DU at the gNB CU;
computing the intermediate factor of a LTE DBS factor as m * a DBS weight * (the LTE Desired Buffer Size / (the LTE DBS + an NR DBS);
setting the NR DBS for a DRB equal to the DBS in the NR DDDS from the NR DU at the gNB CU;
computing the intermediate factor of a NR DBS factor as m * a DBS weight * (the NR Desired Buffer Size / (the LTE DBS + an NR DBS); and
computing the final split factor. If there is data in a Packet Data Convergence Protocol (PDCP) Data Queue, the method can further comprises: when routing DL Packet Data Convergence Protocol (PDCP) PDUs in the 5G leg, the DBS at an SgNB CU-UP of the gNB CU for the 5G leg is updated using the last received DBS from the MeNB DU and successfully transmitted bytes from the SgNB CU-UP to the MeNB DU; and when routing DL PDCP PDUs in an NR Leg, the DBS at the SgNB CU-UP for NR is updated using a last received DBS from a SgNB DU and the number of successfully transmitted bytes from the SgNB CU-UP to the SgNB DU

The method can further comprise computing a LTE DDR Factor ddrFactorLTE and a NR DDR factor ddrFactorNR are configured to operate on the received DDR on either or both of the 4G leg or the 5G leg.
The method can further comprise the intermediate factor being computed as the ratio of DDR received in the respective 4G leg and the 5G leg to the sum of a latest of the DDRs received in DDDS from both the 4G leg and the 5G leg.
The method can further comprise:

when the gNB receives the LTE DDDS from the LTE DU, the DDR LTE Factor (ddrFactorLTE) is set to m * a DDR weight (WDdr) if the DDR is absent in the LTE DDDS message; and
if DDR is present in LTE DDDS message, the DDR LTE factor is set to ddrFactorLTE = m * Wddr * (DDR from LTE DDDS)/(the DDR from LTE DDDS + a DDR as received from a latest NR DDDS).

The method can further comprise:

when the gNB receives the NB DDDS from the NR DU, the DDR NR Factor (ddrFactorLTE) is set to m * a DDR weight (WDdr) if the DDR is absent in the NR DDDS message; and
if DDR is present in NR DDDS message, the DDR NR factor is set to ddrFactorNR = m * Wddr * (DDR from NR DDDS)/(the DDR from NR DDDS + a DDR as received from a latest LTE DDDS).

The method can further comprise: when the gNB receives the LTE DDDS from the LTE DU, the DDR LTE Factor (ddrFactorLTE) is set to m * a DDR weight (WDdr) if the DDR is absent in the LTE DDDS message; and if DDR is present in LTE DDDS message, the DDR LTE factor is set to ddrFactorLTE = m * Wddr * (DDR from LTE DDDS)/(the DDR from LTE DDDS + a DDR as received from a latest NR DDDS of the NR DDDS).

The method can further comprise: processing, at the gNB CU-UP or a RAN Intelligent Controller (RIC), midhaul quality parameters in the DDDS to determine the quality of the 4G leg and the 5G leg. The midhaul quality parameters further comprise:

a Number of lost NR-U Sequence Number ranges reported;
a start of lost NR-U Sequence Number range and end of lost NR-U Sequence Number range;
a Highest successfully delivered NR PDCP Sequence Number (RLC AM);
a Highest transmitted NR PDCP Sequence Number (RLC UM);
a Successfully delivered retransmitted NR PDCP Sequence Number; and
a Retransmitted NR PDCP Sequence Number. The method can further comprise: when a cause report element in the DDDS message includes cause value including a Radio Link Outage, the Radio Link Outage indicating one of the a 4G leg or the 5G leg can no longer continue to transmit the DL PDCP packets, the remaining 4G leg or 5G leg that is an operative leg continues to transmit the packets from the PDCP PDU Queue, and where the gNB CU-UP is unaware of the NR UP PDCP packets that are transmitted or yet-to-be-transmitted from the DU to UE in the leg experiencing the outage, the gNB CU-UP transmits all the packets which have not been acknowledged from the leg reporting Radio Link Outage to the operative leg.

The method can further comprise:

determining, by gNB CU-UP or the RIC, which PDCP SNs are received successfully at UE using the Highest successfully delivered NR PDCP Sequence Number parameter, the the Highest transmitted NR PDCP Sequence Number parameter, or both; and
excluding PDCP SNs that are received successfully at UE when the gNB CU-UP decide which PDCP SNs are received successfully at UE and while the gNB CU-UP transmits the PDCP SNs on the operative leg.

The method can further comprise:
transmitting all the packets on only the operative leg until the DDDS message includes cause value including a Radio Link resume.

The method can further comprise:
computing and maintaining a final Split Factor per 4G leg and 5G leg. The method can further comprise:

recomputing the intermediate split factors;
calculating the sum of all the intermediate factors of a given leg Li, where i takes values "LTE" and "5G NR" and the total sum of all intermediate factors of both legs is denoted as L;
computing the final split factor for a leg-i as the ratio of Li to L; and
splitting the data transmission in proportion to an LTE Split Factor (SplitFcatorLTE) and a NR Split Factor (SplitFactorNR) across the 4G leg and 5G leg.

In an implementation, a method comprises:

calculating a Routing Metric as a measure of throughput a 4G leg link or a 5G leg link can provide, wherein the routing metric includes a Routing Metric ratio for the throughput measure of the 4G leg link or the 5G leg link,
dynamically splitting, by a gNB node centralized unit user Plane (gNB CU-UP), Protocol Data Units PDUs across the 4G leg link or 5G leg link based on the Routing Metric ratio The Routing Metric can be calculated as: Routing Metric= MCSrate(AverageCQI)×(DL Radio Quality Index)/100× F1(HARQ Failure )×F2(PL,UL Radio Quality Index). If the F1(HARQ failure) is below a threshold, the value of function becomes 1; if the HARQ failure rate is higher than the threshold, the value of function reduces to zero. The HARQ failure can be calculated as: F1(HARQ Failure)=1-(HARQ Failure rate)/100. The gNB CU-UP or a RIC can compute the Routing Metric with the a split factor, a DBS factor, a DBS weight factors, a DDR factor, and a DDR weight factor, to decide an optimal split factor splitting across the 4G leg link and 5G leg link. The computation is executed in the RAN Intelligent Controller (RIC). The RIC computation can include data from different DUs.

In an implementation, a method comprises:

calculating a DU delay at a gNB centralized unit user Plane (gNB CU-UP) or a RAN Intelligent Controller (RIC) with one or more DL Delay counters; and

factoring DU delay for a policy to be executed by the gNB when splitting a packet transmission over a 4G leg and a 5G leg. A DU message for assistance information data can include a DL Delay DU Result to convey a DL delay at the DU to the gNB CU-UP. The method can further comprise: calculating the DU delay at the gNB CU-UP, wherein a DU message to convey a DL delay at the DU is relayed from the DU to a CU-CP via an FI-C interface, and from the CU-CP to the gNB CU-UP over an E1 interface. A UE CONTEXT SETUP REQUEST message and a UE CONTEXT MODIFICATION REQUEST message can include Boolean parameters for "RLC Delay Required", "Periodicity for RLC Delay", and "RLC Delay Inclusion" for all the Signaling Radio Bearers (SRB) and Data Radio Bearers (DRB) for which RLC delay in DU is sought. An FI-C message can include a DRB Stats field, which is configured to include UE gNB-CU UE F1AP ID, gNB-DU UE F1AP ID and RLC Delay for as many DRBs for which the DU agreed to send RLC delay information. An E1 interface message can include an F1-C Container field which encapsulates the DRB Stats field data.

The method can further comprise:

estimating, by the gNB CU-UP or the RIC, a one-way delay in the DL across the 4G leg and the 5G leg; and factoring the estimated delay when splitting the packet transmission over 4G and 5G legs by interleaving packets based on PDCP SNs when transmitting the packets to the UE so that the of the packets arrive substantially in order at the UE. To minimize out-of-order PDCP SN arrival at a UE's Packet Data Convergence Protocol (PDCP) layer, a smaller SN can be scheduled on a longer of the 4G leg or 5G leg while a larger SN is scheduled on the shorter of the 4G leg or 5G leg.

The method can further comprise:

calculating a DU delay at the RIC with one or more DL Delay counters sent via an E2 interface;
identifying one or more policies to be execute by the gNB CU-UP; and
sending a control request from the RIC to the gNB CU-UP to execute the policy on the 4G leg, the 5G leg, or both.

The policy for execution can be one or more of:

Policy1: send P number of packets for next M milliseconds;
Policy2: interleave the PDCP Packets between MeNB and SgNB in M:S pattern where M packets would be transmitted in MeNB and next S Packets would be transmitted over SgNB;
Policy3: route entire packets towards SgNB for next M milliseconds; and
Policy4: route entire packets towards MeNB for next N milliseconds.

## BRIEF DESCRIPTION OF THE DRAWINGS

Figure 1 is a block diagram of a system architecture.

Figure 2 shows an example of a User Plane Stack.

Figure 3 shows an example of a Control Plane Stack.

Figure 4A shows an example of a Separation of CU-CP (CU-Control Plane) and CU-UP (CU-User Plane).

Figure 4B shows an example of a Separation of CU-CP (CU-Control Plane) and CU-UP (CU-User Plane).

Figure 5 shows a DL (Downlink) Layer 2 Structure.

Figure 6 shows an exemplary logical flow for implementing an RB allocation policy.

Figure 7 shows an L2 Data Flow example.

Figure 8A shows an example of an O-RAN architecture.

Figure 8B shows an example of an O-RAN architecture.

Figure 9A illustrates a PDU Session architecture consisting of multiple DRBs.

Figure 9B illustrates a flow for PDU sessions, DRBs and GTP-U Tunnels.

Figure 9C illustrates a CU and DU view on PDU session, DRBs and GTP-U tunnels for a 5G network architecture.

Figure 10A shows DL User data from CU-UP to RLC SDU queues at the DU.

Figure 10B shows DL Data Delivery Status (DDDS) - Flow Control Feedback from DU to CU-UP.

Figure 10C shows Radio Assistance Information from DU to CU-UP.

Figure 11A illustrates an E-UTRAN architecture.

Figure 11B illustrates an EN-DC architecture.

Figure 12A illustrates a downlink split bearer in Non-Standalone NSA architecture for downlink data.

Figure 12B illustrates UL split bearer architecture in Non-Standalone NSA architecture.

Figure 12C shows logical architecture for split bearer in NSA Architecture.

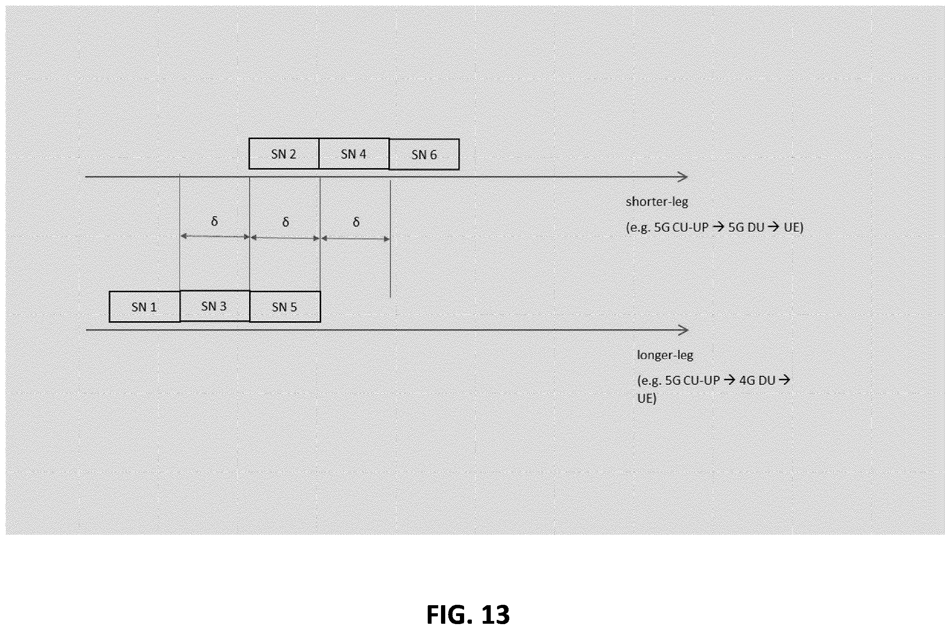

Figure 13 illustrates an exemplary flow for PDCP scheduling.

Figure 14 illustrates implementation of a method for data routing in NSA architecture.

## DETAILED DESCRIPTION OF THE IMPLEMENTATIONS

Reference is made to Third Generation Partnership Project (3GPP) and the Internet Engineering Task Force (IETF) and related standards bodies in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers are incorporated by reference in their entirety hereby, define the related terms and architecture reference models that follow.

O-RAN.WG4.MP.0-R003-v13.00

3GPP TS 23.501 V 18.1.0 2023-04-05

3GPP TS 28.552_ V18.2.0 2023-03-30

3GPP TS 38.300 V 17.4.0 03-28-2023

3GPP TS 38.401 V 17.4.0 2023-04-03

3GPP TS 38.501 V 18.1.0 2023-04-05

3GPP TS 38.425 17.3.0, 2023-04-03

*Acronyms*

3GPP: Third generation partnership project
5GC: 5G Core Network
5G NR: 5G New Radio
5QI: 5G QoS Identifier
ACK: Acknowledgement
ACLR: Gain and Adjacent Channel Leakage Ratio
ADC: Analog-to-Digital Converter
AM: Acknowledged Mode
APN: Access Point Name
ARP: Allocation and Retention Priority
ASIC: Application Specific Integrated Circuit
AWGN: Additive White Gaussian Noise
BFW: Beamforming weight
BS: Base Station
CNF: Cloud-Native Network Function
CP: Control Plane
C-RAN: cloud radio access network
CU: Centralized unit
CU-CP: Centralized Unit - Control Plane
CU-UP: Centralized Unit - User Plane
CQI: Channel Quality Indicator
DAC: Digital-to-Analog Converter
DC: Dual Connectivity
DCI: Downlink Control Information
DDDS: DL Data Delivery Status
DFE: Digital Front End
DL: Downlink
DMRS: Demodulation Reference Signal
DNN: Data Network Name
DRB: Data Radio Bearer
DU: Distributed unit
eNB: evolved Node B
eMBB: Enhanced Mobile Broadband
EPC: Evolved Packet Core
EN-DC
EP: Endpoint Pod
E-UTRA: Evolved Universal Terrestrial Radio Access
GBR: Guaranteed Bit Rate
gNB: gNodeB (5G base station)
GTP-U: General Packet Radio Service (GPRS) Tunnelling Protocol - User Plane
GW: Gateway
HA: High Availability
IoT: Internet of Things
IP: Internet Protocol
IWF: Interworking Function
L1: Layer 1
L2: Layer 2
L3: Layer 3
LC: Logical Channel
MAC: Medium Access Control
MIMO: multiple-in multiple-out
MME: Mobility Management Entity
MR-DC: Multi-Radio Dual Connectivity
M-plane: Management plane interface between SMO and O-RU

NACK: Negative Acknowledgement
NAS: Non-Access Stratum
NB: Narrowband
Near-RT RIC: Near-Real-Time RIC
NMS: Network Management System
NR: New Radio
NR-U: New Radio - User Plane
NSA: Non-Standalone Architecture
OFDM: orthogonal frequency-division multiplexing
O-RAN: Open Radio Access Network
PA: Power Amplifier
PDB: Packet Delay Budget
PDCP: Packet Data Convergence Protocol
PDU: Protocol Data Unit
PDCCH: Physical Downlink Control Channel
PDSCH: Physical Downlink Shared Channel
PHY: Physical Layer
PRG: Physical Resource block Group
PUCCH: Physical Uplink Control Channel
PUSCH: Physical Uplink Shared Channel
QCI: QoS Class Identifier
QFI: QoS Flow Id
QFI: QoS Flow Identifier
QoS : Quality of Service
RAT: Radio Access Technology
RB: Resource Block
RDI: Reflective QoS Flow to DRB Indication
RIC: RAN Intelligent Controller
RLC: Radio Link Control
RLC-AM: RLC Acknowledged Mode
RLC-UM: RLC Unacknowledged Mode
RMM: Radio resource management
RQI: Reflective QoS Indication
RRC: Radio Resource Control
RU: Radio Unit
SA: Standalone Architecture
SCTP: Stream Control Transmission Protocol
SDAP: Service Data Adaptation Protocol
S-GW: Serving Gateway
SINR: Signal-to-Interference and Noise Ratio
SMO: Service Management and Orchestration system
SN: Signal Node
SR: Scheduling Request
SRS: Sounding Reference Signal
TCP: Transmission Control Protocol
TEID: Tunnel Endpoint Identifier
U-plane or UP: User plane
UPF: User Plane Function
UE: user equipment
UL: uplink
UM: Unacknowledged Mode
URLLC: Ultra Reliance Low Latency Communication

Described are implementations of technology for a cloud-based Radio Access Networks (RAN), where a significant portion of the RAN layer processing is performed at a central unit (CU) and a distributed unit (DU). Both CUs and DUs are also known as the baseband units (BBUs). CUs are usually located in the cloud on commercial off the shelf servers, while DUs can be distributed. while the RF and real-time critical functions can be processed in the remote radio unit (RU).

*RAN Architectures*

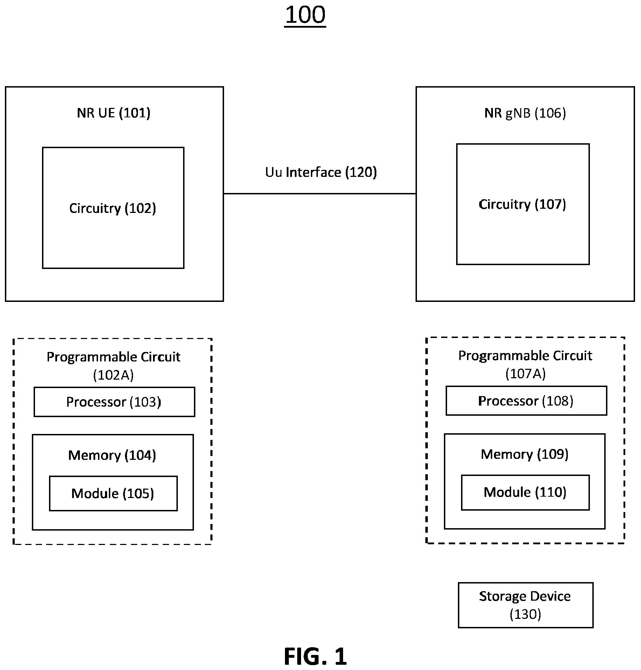

Figure 1 is a block diagram of a system 100 for implementations as described herein. System 100 includes a NR UE 101, a NR gNB 106. The NR UE and NR gNB 106 are communicatively coupled via a Uu interface 120.

NR UE 101 includes electronic circuitry, namely circuitry 102, that performs operations on behalf of NR UE 101 to execute methods described herein. Circuity 102 may be implemented with any or all of (a) discrete electronic components, (b) firmware, and (c) a programmable circuit 102A.

NR gNB 106 includes electronic circuitry, namely circuitry 107, that performs operations on behalf of NR gNB 106 to execute methods described herein. Circuity 107 may be implemented with any or all of (a) discrete electronic components, (b) firmware, and (c) a programmable circuit 107A.

Programmable circuit 107A, which is an implementation of circuitry 107, includes a processor 108 and a memory 109. Processor 108 is an electronic device configured of logic circuitry that responds to and executes instructions. Memory 109 is a tangible, non-transitory, computer-readable storage device encoded with a computer program. In this regard, memory 109 stores data and instructions, i.e., program code, that are readable and executable by processor 108 for controlling operations of processor 108. Memory 109 may be implemented in a random-access memory (RAM), a hard drive, a read only memory (ROM), or a combination thereof. One of the components of memory 109 is a program module, namely module 110. Module 110 contains instructions for controlling processor 108 to execute operations described herein on behalf of NR gNB 106.

The term "module" is used herein to denote a functional operation that may be embodied either as a stand-alone component or as an integrated configuration of a plurality of subordinate components. Thus, each of module 105 and 110 may be implemented as a single module or as a plurality of modules that operate in cooperation with one another.

While modules 110 are indicated as being already loaded into memories 109, and module 110 may be configured on a storage device 130 for subsequent loading into their memories 109. Storage device 130 is a tangible, non-transitory, computer-readable storage device that stores module 110 thereon. Examples of storage device 130 include (a) a compact disk, (b) a magnetic tape, (c) a read only memory, (d) an optical storage medium, (e) a hard drive, (f) a memory unit consisting of multiple parallel hard drives, (g) a universal serial bus (USB) flash drive, (h) a random-access memory, and (i) an electronic storage device coupled to NR gNB 106 via a data communications network.

Uu Interface (120) is the radio link between the NR UE and NR gNB, which is compliant to the 5G NR specification.

UEs 101 can be dispersed throughout a wireless communication network, and each UE may be stationary or mobile. A UE includes: an access terminal, a terminal, a mobile station, a subscriber unit, a station, etc. A UE can also include be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a drone, a robot/robotic device, a netbook, a smartbook, an ultrabook, a medical device, medical equipment, a healthcare device, a biometric sensor/device, a wearable device such as a smart watch, smart clothing, smart glasses, a smart wristband, and/or smart jewelry (e.g., a smart ring, a smart bracelet, etc.), an entertainment device (e.g., a music device, a video device, a satellite radio, etc.), industrial manufacturing equipment, a global positioning system (GPS) device, or any other suitable device configured to communicate via a wireless or wired medium. UEs can include UEs considered as machine-type communication (MTC) UEs or enhanced/evolved MTC (eMTC) UEs. MTC/eMTC UEs that can be implemented as IoT UEs. IoT UEs include, for example, robots/robotic devices, drones, remote devices, sensors, meters, monitors, cameras, location tags, etc., that can communicate with a BS, another device (e.g., remote device), or some other entity. A wireless node can provide, for example, connectivity for or to a network (e.g., a wide area network such as Internet or a cellular network) via a wired or wireless communication link.

One or more UEs 101 in the wireless communication network can be a narrowband bandwidth UE. As used herein, devices with limited communication resources, e.g. smaller bandwidth, are considered as narrowband UEs. Similarly, legacy devices, such as legacy and/or advanced UEs can be considered as wideband UEs. Wideband UEs are generally understood as devices that use greater amounts of bandwidth than narrowband UEs.

The UEs 101 are configured to connect, for example, communicatively couple, with an or RAN. In embodiments, the RAN may be an NG RAN or a 5G RAN, an E-UTRAN, an MF RAN, or a legacy RAN, such as a UTRAN or GERAN. The term "NG RAN" or the like refers to a RAN 110 that operates in an NR or 5G system, the term "E-UTRAN" or the like refers to a RAN that operates in an LTE or 4G system, and the term "MF RAN" or the like refers to a RAN that operates in an MF system 100. The UEs 101 utilize connections (or channels), respectively, each of which comprises a physical communications interface or layer. The connections and may can comprise several different physical DL channels and several different physical UL channels. As examples, the physical DL channels include the PDSCH, PMCH, PDCCH, EPDCCH, MPDCCH, R-PDCCH, SPDCCH, PBCH, PCFICH, PHICH, NPBCH, NPDCCH, NPDSCH, and/or any other physical DL channels mentioned herein. As examples, the physical UL channels include the PRACH, PUSCH, PUCCH, SPUCCH, NPRACH, NPUSCH, and/or any other physical UL channels mentioned herein.

The RAN can include one or more AN nodes or RAN nodes. These access nodes can be referred to as BS, gNBs, RAN nodes, eNBs, NodeBs, RSUs, MF-APs, TRxPs or TRPs, and so forth, and comprise ground stations (e.g.,

terrestrial access points) or satellite stations providing coverage within a geographic area (e.g., a cell). The term "NG RAN node" or the like refers to a RAN node that operates in an NR or 5G system (e.g., a gNB), and the term "E-UTRAN node" or the like refers to a RAN node that operates in an LTE or 4G system (e.g., an eNB). According to various embodiments, the RAN nodes can be implemented as one or more of a dedicated physical device such as a macrocell base station, and/or a low power base station for providing femtocells, picocells or other like cells having smaller coverage areas, smaller user capacity, or higher bandwidth compared to macrocells.

In some embodiments, all or parts of the RAN nodes can be implemented as one or more software entities running on server computers as part of a virtual network, which may be referred to as a CRAN and/or a vBBU. In these embodiments, the CRAN or vBBU may implement a RAN function split, such as a PDCP split wherein RRC and PDCP layers are operated by the CRAN/vBBU and other L2 protocol entities are operated by individual RAN nodes; a MAC/PHY split wherein RRC, PDCP, RLC, and MAC layers are operated by the CRAN/vBBU and the PHY layer is operated by individual RAN nodes; or a "lower PHY" split wherein RRC, PDCP, RLC, MAC layers and upper portions of the PHY layer are operated by the CRAN/vBBU and lower portions of the PHY layer are operated by individual RAN nodes. This virtualized framework allows the freed-up processor cores of the RAN nodes to perform other virtualized applications. In some implementations, an individual RAN node can represent individual gNB-DUs that are connected to a gNB-CU 151via individual F1 interfaces. In these implementations, the gNB-DUs may include one or more remote radio heads (RRH), and the gNB-CU 151may be operated by a server that is located in the RAN or by a server pool in a similar manner as the CRAN/vBBU. One or more of the RAN nodes can be next generation eNBs (ng-eNBs), which are RAN nodes that provide E-UTRA user plane and control plane protocol terminations toward the UEs 101, and are connected to a 5GC via an NG interface. In MF implementations, the MF-APs are entities that provide MultiFire radio services, and may be similar to eNBs in an 3GPP architecture.

In some implementations, access to a wireless interface can be scheduled, wherein a scheduling entity (e.g.: BS, gNB, etc.) allocates bandwidth resources for devices and equipment within its service area or cell. As scheduling entity can be configured to schedule, assign, reconfigure, and release resources for one or more subordinate entities. In some examples, a UE 101 (or other device) may function as master node scheduling entity, scheduling resources for one or more secondary node subordinate entities (e.g., one or more other UEs 101). Thus, in a wireless communication network with a scheduled access to time-frequency resources and having a cellular configuration, a P2P configuration, and a mesh configuration, a scheduling entity and one or more subordinate entities may communicate utilizing the scheduled resources.

BS or gNB 106 may be equipped with T antennas and UE 101 may be equipped with R antennas, where in general $T \geq 1$ and $R \geq 1$. At BS, a transmit processor is configured to receive data from a data source for one or more UEs 101 and select one or more modulation and coding schemes (MCS) for each UE based on channel quality indicators (CQIs) received from the UE 101. The BS is configured to process (e.g., encode and modulate) the data for each UE 101 based on the MCS(s) selected for the UE 101, and provide data symbols for all UEs. A transmit processor is also configured to process system information (e.g., for static resource partitioning information (SRPI), etc.) and control information (e.g., CQI requests, grants, upper layer signaling, etc.) and can provide overhead symbols and control symbols. Processor 108 may also generate reference symbols for reference signals (e.g., the cell-specific reference signal (CRS)) and synchronization signals (e.g., the primary synchronization signal (PSS) and the secondary synchronization signal (SSS)). A transmit (TX) multiple-input multiple-output (MIMO) processor can be configured perform spatial processing (e.g., precoding) on the data symbols, the control symbols, the overhead symbols, and/or the reference symbols, if applicable, and can be configured to provide T output symbol streams to T modulators (MODs). Each modulator can be configured to process a respective output symbol stream (e.g., for OFDM, etc.) to obtain an output sample stream. Each modulator can further be configured to process (e.g., convert to analog, amplify, filter, and upconvert) the output sample stream to obtain a downlink signal. T downlink signals from modulators can be transmitted via T antennas.

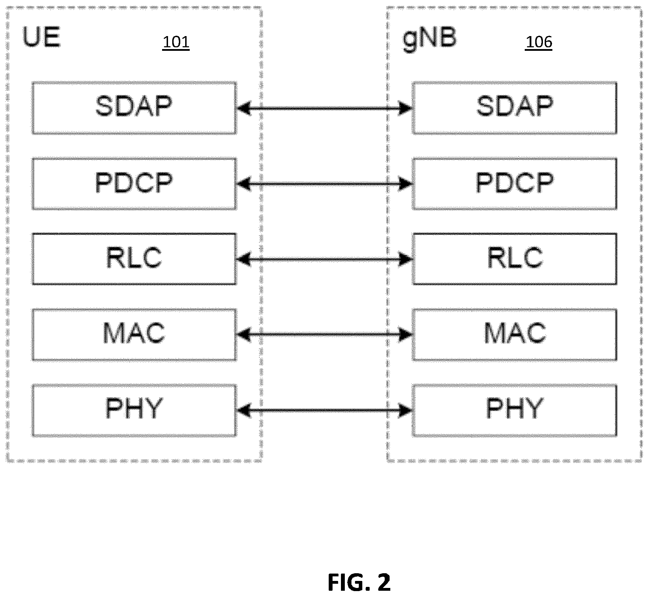

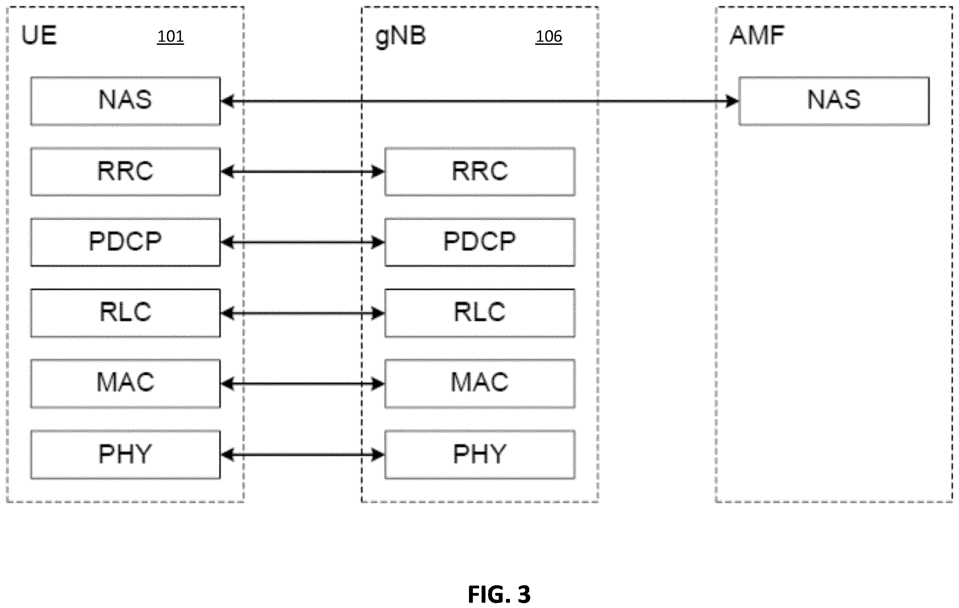

An overview of 5G NR Stacks is as follows. 5G NR (New Radio) user and control plane functions with monolithic gNB 106 are shown in the Figure 2 and Figure 3 . For the user plane, PHY (physical), MAC (Medium Access Control), RLC (Radio Link Control), PDCP (Packet Data Convergence Protocol) and SDAP (Service Data Adaptation Protocol) sublayers are terminated in the gNB 106 on the network side. For the control plane, RRC (Radio Resource Control), PDCP, RLC, MAC and PHY sublayers are terminated in the gNB 106 on the network side and NAS (Non-Access Stratum) is terminated in the AMF (Access Mobility Function) on the network side. Figure 2 shows an example of a User Plane Stack as descried in 3GPP TS 38.300. Figure 3 shows an example of a Control Plane Stack as described in 3GPP TS 38.300.

An NG-RAN (NG-Radio Access Network) architecture from 3GPP TS 38.401 is described below. F1 is the interface between gNB-CU 151 (gNB - Centralized Unit) and gNB-DU 152 (gNB - Distributed Unit), NG is the interface between gNB-CU 151 (or gNB) and 5GC (5G Core), E1 is the interface between CU-CP (CU-Control Plane) and CU-UP (CU-User Plane), and Xn is interface between gNBs.

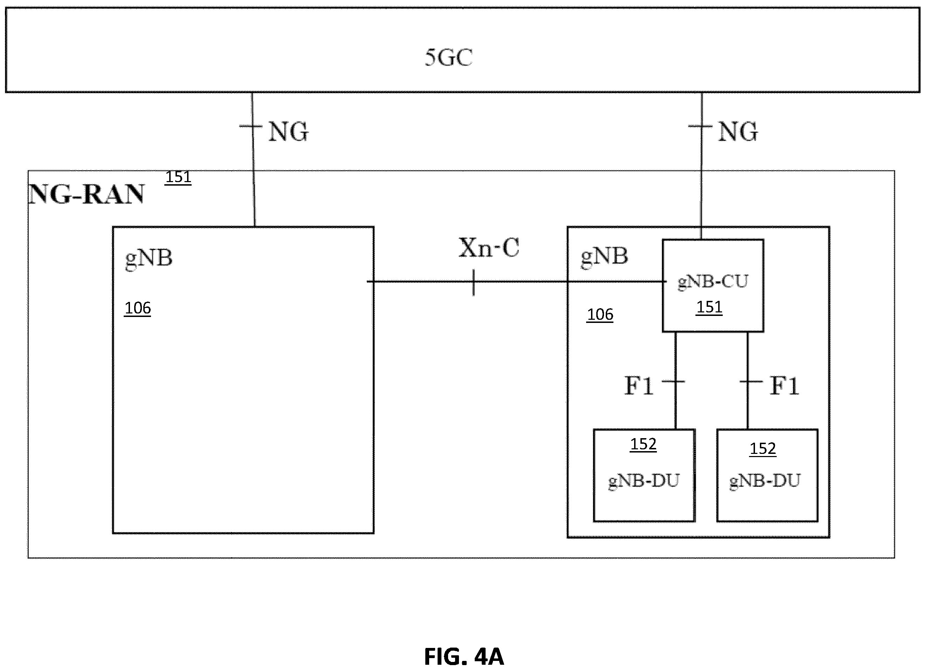

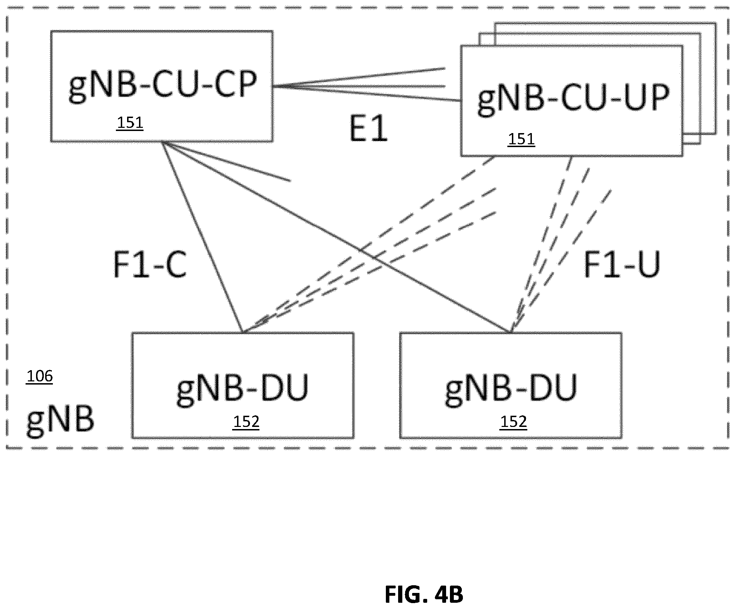

A gNB 106 may consist of a gNB-CU-CP, multiple gNB-CU-UPs and multiple gNB-DUs. The gNB-CU-CP is connected to the gNB-DU 152 through the F1-C interface and to the gNB-CU-UP through the E1 interface. The gNB-CU-UP is connected to the gNB-DU 152 through the F1-U interface and to the gNB-CU-CP through the E1 interface. One gNB-DU 152 is connected to only one gNB-CU-CP and one gNB-CU-UP is connected to only one gNB-CU-CP. Figure 4A shows an example of an NG-RAN Architecture as described in 3GPP TS 38.501. Figure 4B shows an example of a Separation of CU-CP (CU-Control Plane) and CU-UP (CU-User Plane) as described in 3GPP TS 38.401.

A Layer 2 (L2) of 5G NR is split into the following sublayers is described in 3GPP TS 38.300):

◦ Medium Access Control (MAC): The MAC sublayer offers Logical Channels (LCs) to the RLC sublayer. This layer runs a MAC scheduler to schedule radio resources across different LCs (and their associated radio bearers).

◦ Radio Link Control (RLC): The RLC sublayer offers RLC channels to the PDCP sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.

◦ Packet Data Convergence Protocol (PDCP): The PDCP sublayer offers Radio Bearers (RBs) to the SDAP sublayer. There are two types of Radio Bearers: Data Radio Bearers (DRBs) for data and Signaling Radio Bearers (SRBs) for control plane.

◦ Service Data Adaptation Protocol (SDAP): The SDAP offers QoS Flows to the 5GC (5G Core). This sublayer provides mapping between a QoS flow and a DRB. It marks QoS Flow Id in DL (downlink) as well as UL (uplink packets).

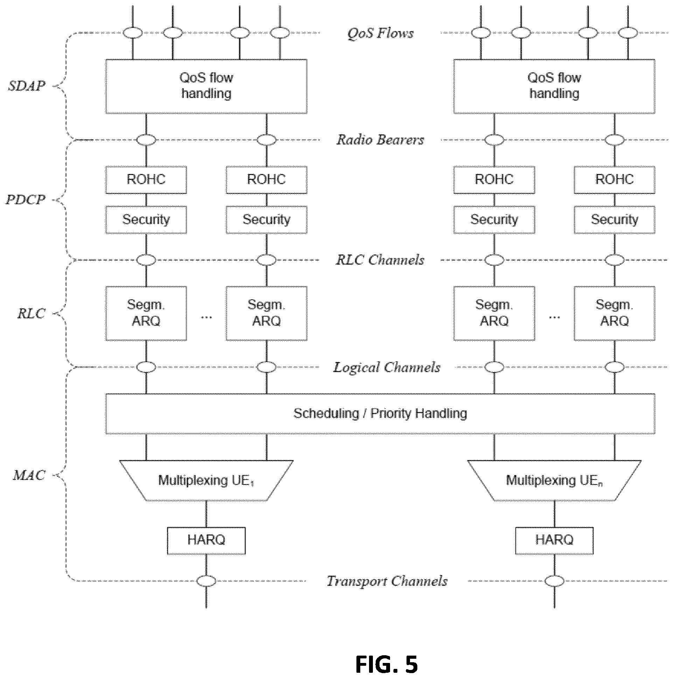

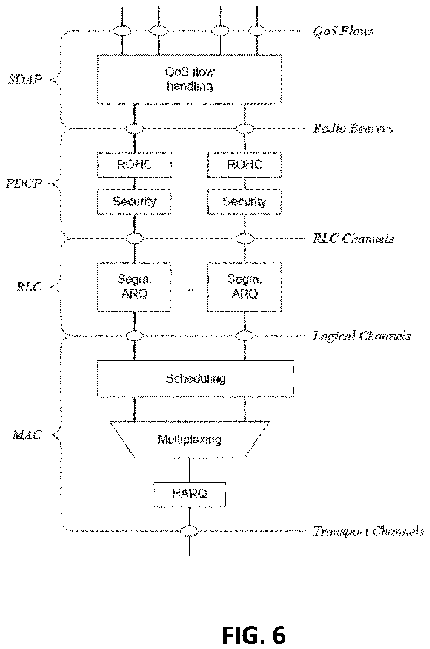

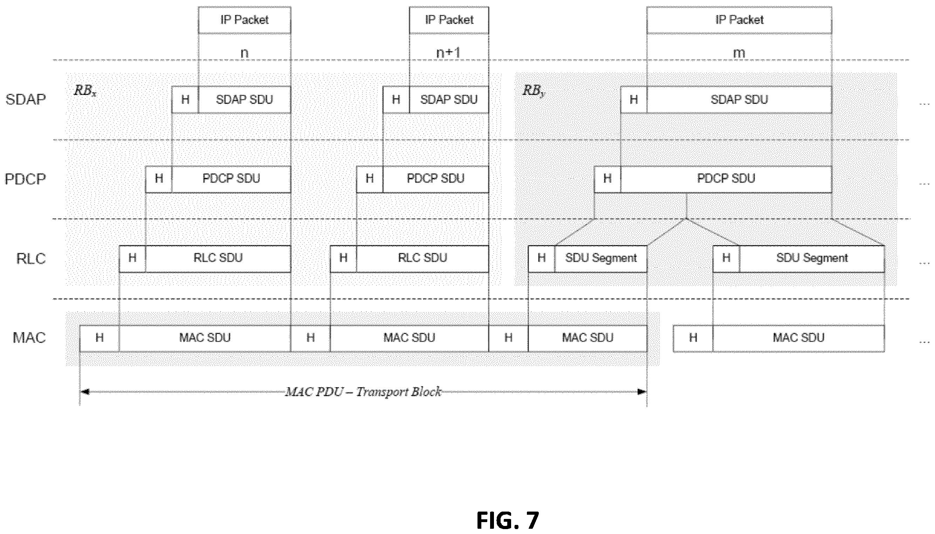

Figure 5 shows a DL (Downlink) Layer 2 Structure as described in 3GPP TS 38.300. Figure 6 shows an UL (uplink) Layer 2 Structure in accord with 3GPP TS38.300. Figure 7 shows an L2 Data Flow example in accord with 3GPP TS 38.300 ([H] denotes headers or subheaders in Figure 7.)

O-RAN, which is based on disaggregated components and connected through open and standardized interfaces is based on 3GPP NG-RAN. An overview of O-RAN with disaggregated RAN (CU, DU, and RU), near-real-time RIC 160 and non-real-time RIC is shown in the figure below. Here, DU (Distributed Unit) and CU (Centralized Unit) are typically implemented using COTS (Commercial off-the-shelf) hardware.

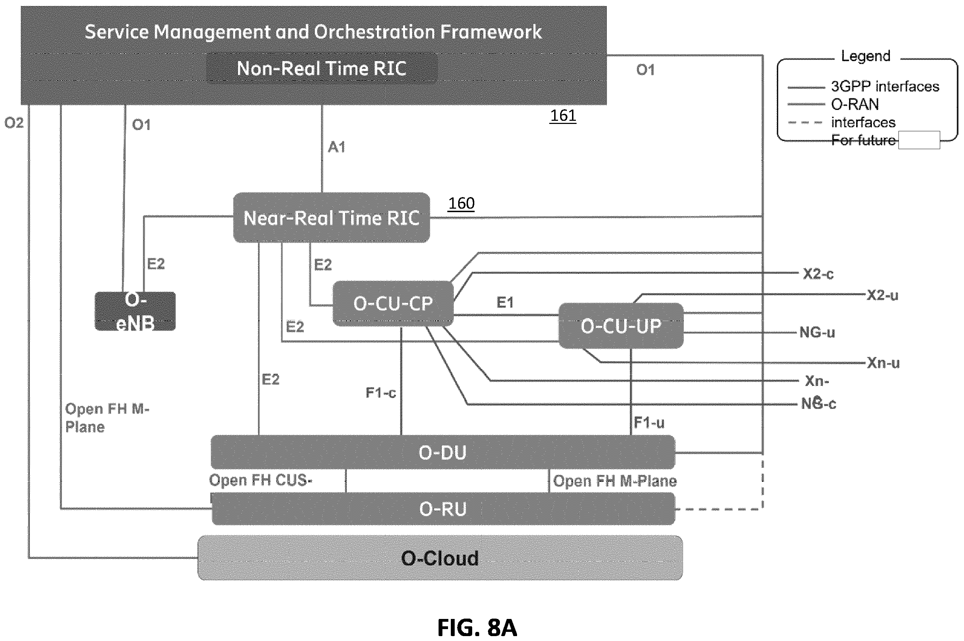

Figures 8A-8B show and example of an O-RAN architecture. In Figure 8A, the CU and the DU are connected using the F1 interface (with F1-C for control plane and F1-U for user plane traffic) over the midhaul (MH) path. One DU could host multiple cells (for example, one DU could host 24 cells) and each cell may support many users. For example, one cell may support 600 RRC Connected users and out of these 600, there may be 200 Active users (i.e.; users which have data to send at a given point of time).

A cell site could consist of multiple sectors and each sector may support multiple cells. For example, one site could consist of three sectors and each sector could support 8 cells (with 8 cells in each sector on different frequency bands). One CU-CP could support multiple DUs and thus multiple cells. For example, a CU-CP could support 1000 cells and around 100,000 UEs. Each UE could support multiple DRBs and there could be multiple instances of CU-UP to serve these DRBs. For example, each UE could support 4 DRBs, and 400,000 DRBs (corresponding to 100,000 UEs) may be served by five CU-UP instances (and one CU-CP instance).

DU can be located in a private data center or it could be located at a cell-site too. CU can also be located in a private data center or even hosted on a public cloud system. DU and CU can be tens of kilometers away. CU can communicate with 5G core system which could also be hosted in the same public cloud system (or could be hosted by a different cloud provider). RU (Radio Unit) is located at cell-site and communicated with DU via a fronthaul (FH) interface.

The E2 nodes (CU and DU) are connected to the near-real-time RIC 160 using the E2 interface. The E2 interface is used to send data (e.g., user, cell, slice KPMs) from the RAN, and deploy control actions and policies to the RAN at near-real-time RIC 160. The application or service at the near-real-time RIC 160 that deploys the control actions and policies to the RAN are called xApps. The near-real-time RIC 160 is connected to the non-real-time RIC 161 using the A1 interface.

SMO manages multiple regional networks, and O-RAN NFs (O-CUs, Near-RT RIC 160, O-DUs) can be deployed in a regional data center which is connected to multiple cell sites or in cell site which is close to localized O-RU according to network requirements. Since SMO Functions and O-RAN NFs are micro services and deployment-independent logical functions, SMO Functions and O-RAN NFs can be composed of multiple deployment instances deployed in the same O-Cloud or in a different O-Cloud in regional data center, or in cell site according to network requirements (ex. capacity, latency, security, and so on) if the secure connection among SMO Functions and O-RAN NFs are available.

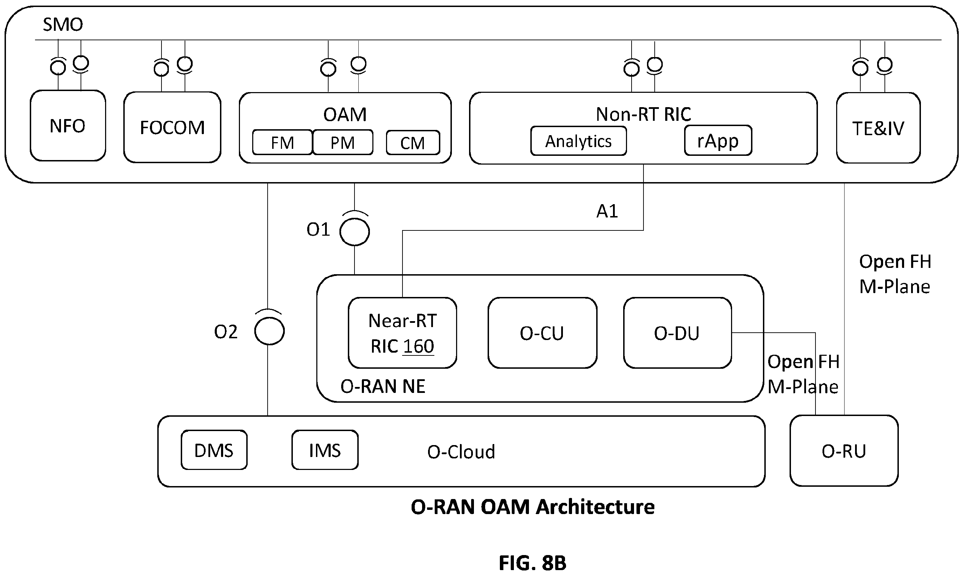

As shown in Figure 8B, an O-RAN compliant SMO defines TE&IV, RAN NF OAM, Non-RT RIC, and NFO, FOCOM services. SMO interacts with O-RAN NFs with O1 interface. SMO interacts with O-RU with Open FH M-Plane interface and interacts O-Cloud via the O2 interface. O-RAN NF OAM manages O-RAN NF CM, FM, PM and creates O-RAN NF inventory and topology in TE&IV. FOCOM/NFO manages O-Cloud resources and creates O-Cloud resources inventory and topology in TE&IV. Analytics/rApp in Non-RT RIC can subscribe O-RAN NFs PM/FM, O-Cloud PM/FM data based on O-RAN NF OAM an FOCOM/NFO. Analytics/rApp in Non-RT RIC can retrieve the O-RAN NF and O-Cloud resource inventory and topology.

PDU Sessions, DRBs, QoS Flows

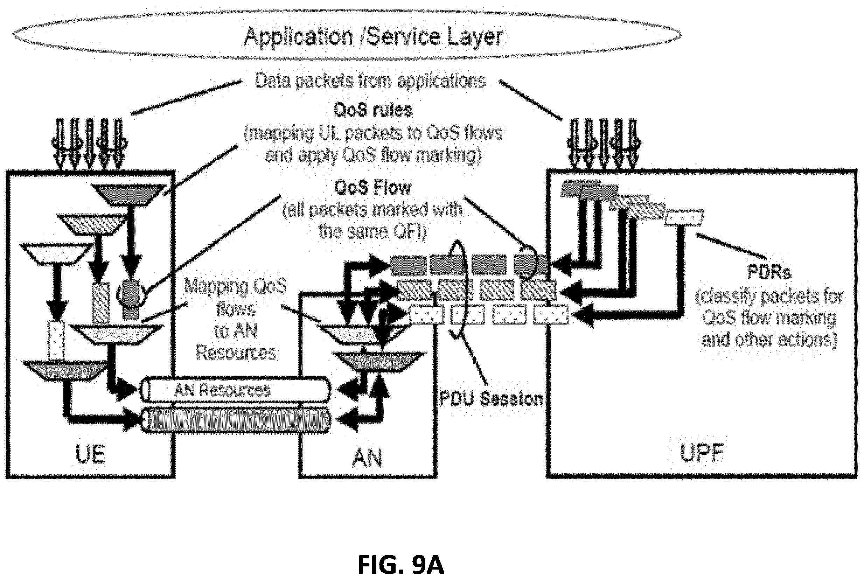

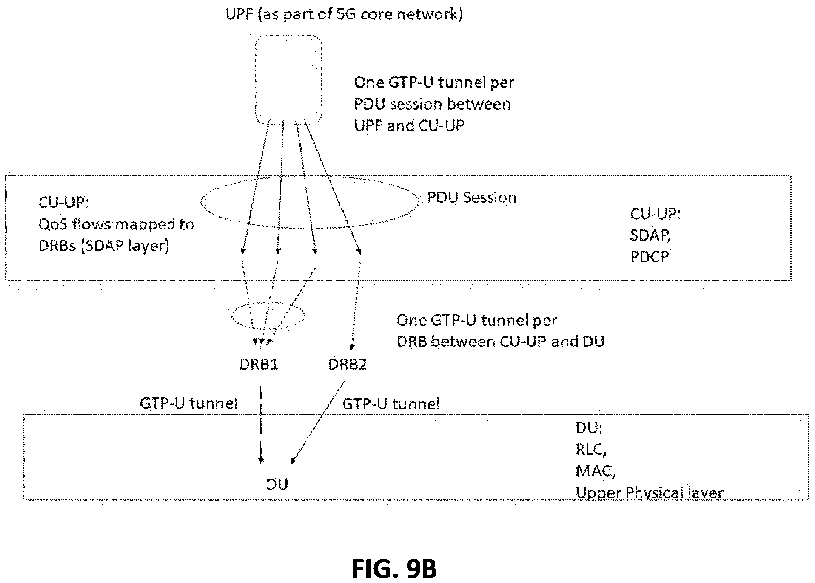

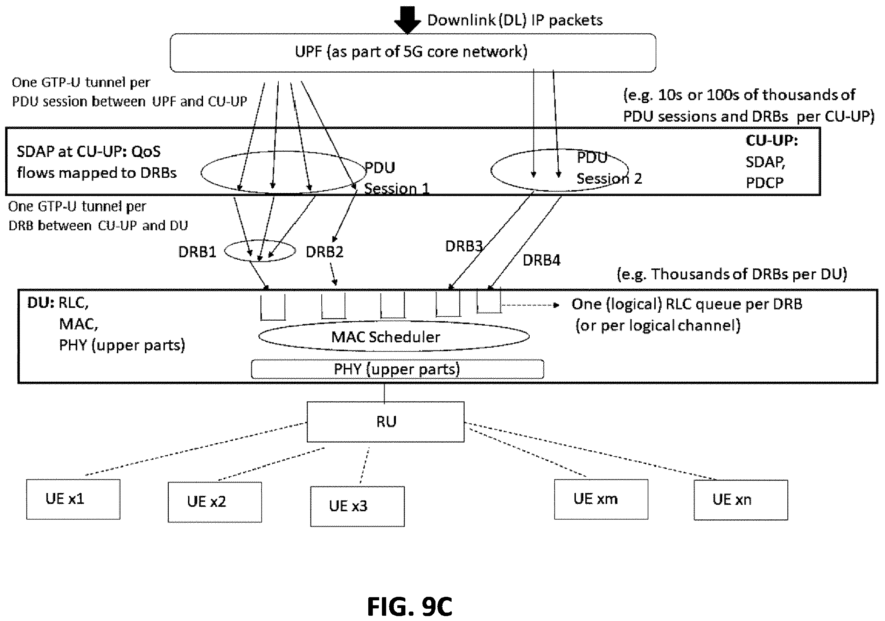

In 5G networks, PDU connectivity service is a service that provides exchange of PDUs between a UE and a data network identified by a Data Network Name (DNN). The PDU Connectivity service is supported via PDU sessions that are established upon request from the UE. This DNN defines the interface to a specific external data network. One or more QoS flows can be supported in a PDU session. All the packets belonging to a specific QoS flow have the same 5QI (5G QoS Identifier). Figure 9A illustrates a PDU Session architecture consisting of multiple DRBs. Each DRB may consist of multiple QoS flows (3GPP TS 23.501). Figure 9B illustrates a flow for PDU sessions, DRBs and GTP-U Tunnels across CU and DU. Figure 9C illustrates a CU and DU view on PDU session, DRBs and GTP-U tunnels for a 5G network architecture.

As shown in Figures 9A-9C, a PDU session comprises the following:
A Data Radio Bearer (DRB) is between UE and CU in RAN and a NG-U GTP tunnel which is between CU and UPF (User Plane Function) in the core network. For the 3GPP's 5G network architecture, the transport connection between the base station (i.e., CU-UP) and User Plane Function (UPF) uses a single GTP-U tunnel per PDU session. The PDU session is identified using GTP-U TEID (Tunnel Endpoint Identifier). The transport connection between DU and CU-UP uses a single GTP-U tunnel per DRB.

SDAP

The SDAP (Service Adaptation Protocol) Layer receives downlink data from the UPF across the NG-U interface. It maps one or more QoS Flow(s) onto a specific DRB. The SDAP header is present between the UE and the CU (when reflective QoS is enabled), and includes a field to identify the QoS flow within a specific PDU session. GTP-U user plane protocol includes a field to identify the QoS flow and is present between CU and UPF (in the core network).

Flow Control between CU-UP and DU

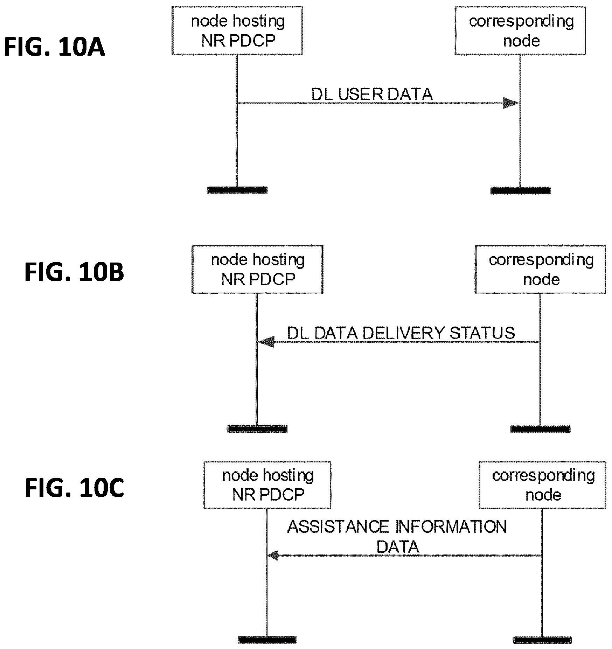

Procedures and functionality of the F1-U interface are defined in 3GPP TS 38.425. This F1-U interface supports NR User Plane (NR-U ) protocol which provides support for flow control and reliability between CU-UP and DU for each DRB. Figure 10 shows DL Data, and Flow Control Feedback (DDDS) in 5G Networks. Downlink User Data (DUD) PDUs are used to carry PDCP PDUs from CU-UP to DU for each DRB. The Downlink Data Delivery Status (DDDS) message conveys Desired Buffer Size (DBS), Desired Data Rate (DDR) and some other parameters from DU to CU-UP for each DRB as part of flow control feedback.

If value of the DBS is zero for a DRB, the NR PDCP hosting node (i.e., the CU-UP here) stops sending data for that DRB from the CU-UP to the DU. If value of the DBS is greater than zero, the NR PDCP hosting node (i.e., CU-UP) can send up to this amount of data for that DRB. The value of DDR is the amount of data desired to be received every second by the DU (from CU-UP) for that DRB. The corresponding node (i.e., DU) can also transfer uplink data from the DU to the CU-UP for the concerned DRB along with the DDDS frame in the same GTP-U tunnel. Transfer of (Radio) Assistance Information (TAI) PDU from DU to CU-UP (see, e.g., Figure 10C) is also supported.

In Figures 10A-10C, the node hosting NR PDCP is CU-UP and the corresponding node is the DU. Figure 10A shows DL User data (i.e., PDCP PDUs) from CU-UP to RLC SDU queues at the DU (corresponding node). Figure 10B shows DL Data Delivery Status (DDDS) - Flow Control Feedback from DU to CU-UP (for each DRB). Figure 10C shows Radio Assistance Information from DU (corresponding node) to CU-UP.

| Bits | | | | | | | | Number of Octets |
|---|---|---|---|---|---|---|---|---|
| 7 | 6 | 5 | 4 | 3 | 2 | 1 | 0 | |
| PDU Type (=1) | | | | Highest Transmitted NR PDCP SN Ind | Highest Delivered NR PDCP SN Ind | Final Frame Ind. | Lost Packet Report | 1 |
| Spare | | | Delivered NR PDCP SN Range Ind | Data rate Ind. | Retransmitted NR PDCP SN Ind | Delivered Retransmitted NR PDCP SN Ind | Cause Report | 1 |
| Desired buffer size for the data radio bearer | | | | | | | | 4 |
| Desired Data Rate | | | | | | | | 0 or 4 |
| Number of lost NR-U Sequence Number ranges reported | | | | | | | | 0 or 1 |
| Start of lost NR-U Sequence Number range | | | | | | | | 0 or (6* Number of reported lost NR-U SN ranges) |
| End of lost NR-U Sequence Number range | | | | | | | | |
| Highest successfully delivered NR PDCP Sequence Number | | | | | | | | 0 or 3 |
| Highest transmitted NR PDCP Sequence Number | | | | | | | | 0 or 3 |
| Cause Value | | | | | | | | 0 or 1 |
| Successfully delivered retransmitted NR PDCP Sequence Number | | | | | | | | 0 or 3 |
| Retransmitted NR PDCP Sequence Number | | | | | | | | 0 or 3 |
| Number of successfully delivered out of sequence PDCP Sequence Number range | | | | | | | | 0 or 1 |
| Start of successfully delivered out of sequence PDCP Sequence Number range | | | | | | | | 0 or (6* Number of successfully delivered out of sequence PDCP Sequence Number range) |
| End of successfully delivered out of sequence PDCP Sequence Number range | | | | | | | | |
| Padding | | | | | | | | 0-3 |

Table 1

Table 1 shows DL Data Delivery Status (DDDS) from the corresponding node (DU) to the node hosting NR PDCP (i.e., CU-UP here) for each DRB.

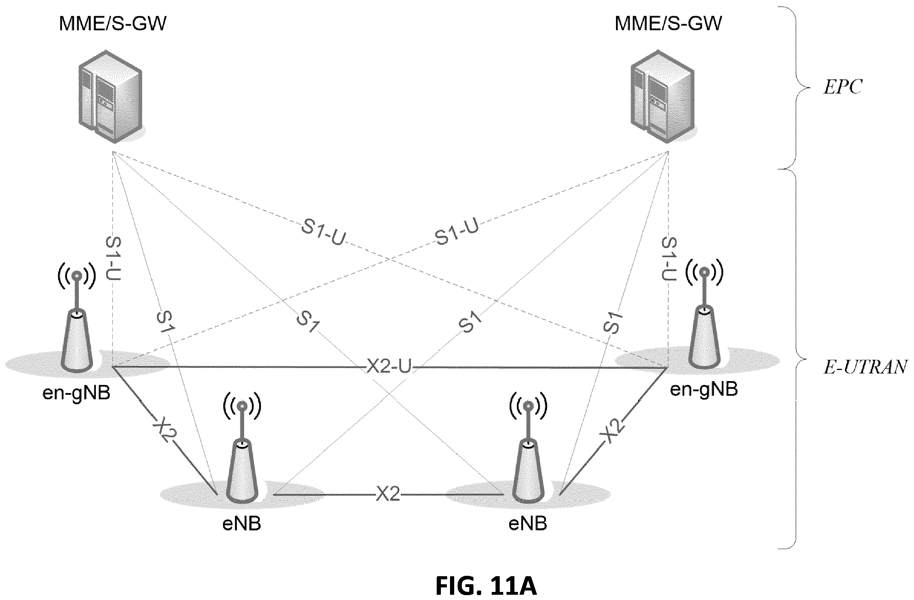

An E-UTRAN architecture is illustrated in Figure 11A. The E-UTRAN comprises of eNBs, providing the E-UTRA U-plane (PDCP/RLC/MAC/PHY) and control plane (RRC) protocol terminations towards the UE. The eNBs are interconnected with each other by means of the X2 interface. The eNBs are also connected by means of the S1 interface to the EPC (Evolved Packet Core), more specifically to the MME (Mobility Management Entity) by means of the S1-MME interface and to the Serving Gateway (S-GW) by means of the S1-U interface. The S1 interface supports a many-to-many relation between MMEs / Serving Gateways and eNBs.

E-UTRAN also supports MR-DC via E-UTRA-NR Dual Connectivity (EN-DC), in which a UE is connected to one eNB that acts as a MN and one en-gNB 106 that acts as a SN. An EN-DC architecture is illustrated in Figure 11A. The eNB is connected to the EPC 140 via the S1 interface and to the en-gNB 106 via the X2 interface. The en-gNB 106 might also be connected to the EPC 140 via the S1-U interface and other en-gNBs 106 via the X2-U interface. In EN-DC, and en-gNB 106 comprises gNB-CU 151and gNB-DU(s)152.

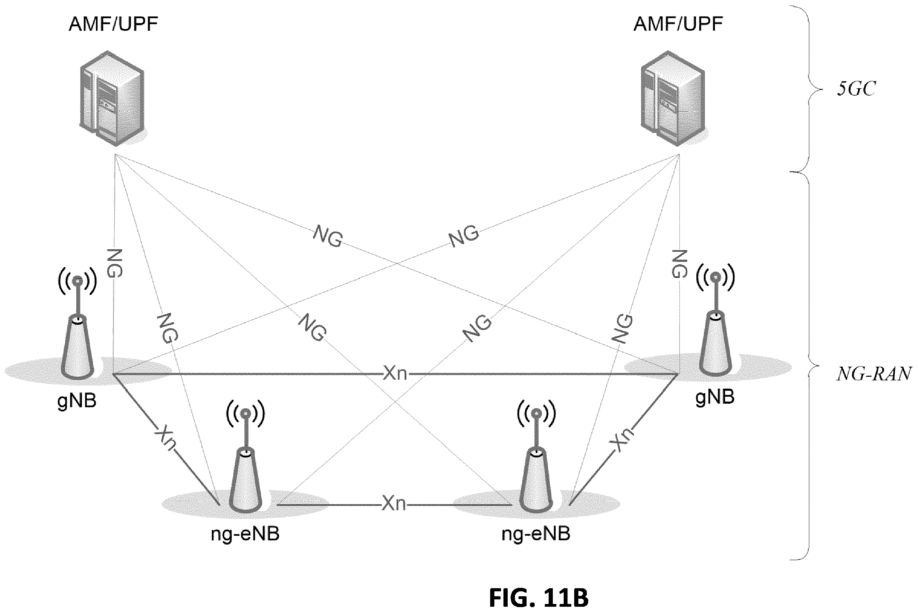

As shown in Figure 11B, in the NG-RAN architecture, NG-RAN node is either:

a gNB, providing NR user plane and control plane protocol terminations towards the UE; or

an ng-eNB, providing E-UTRA user plane and control plane protocol terminations towards the UE. (3GPP TS 38.300 17.3.0.)

As shown in Figure 11B, the gNBs 106 and ng-eNBs are interconnected with each other by means of the Xn interface. The gNBs 106 and ng-eNBs are also connected by means of the NG interfaces to the 5GC, more specifically to the AMF (Access and Mobility Management Function) by means of the NG-C interface and to the UPF (User Plane Function) by means of the NG-U interface.

The gNB 106 and ng-eNB host functions for Radio Resource Management such as: Radio Bearer Control, Radio Admission Control, Connection Mobility Control, Dynamic allocation of resources to UEs in both uplink and downlink (scheduling), connection setup and release; session Management; QoS Flow management and mapping to data radio bearers; Dual Connectivity.

In an example, control information (e.g., scheduling information) may be provided for broadcast and/or multicast operation. The UE may monitor different bundle sizes for the control channel depending on the maximum number of repetitions.

**NSA (Non-Standalone) Architecture and downlink data splitting / routing in the NSA (EN-DC) architecture**

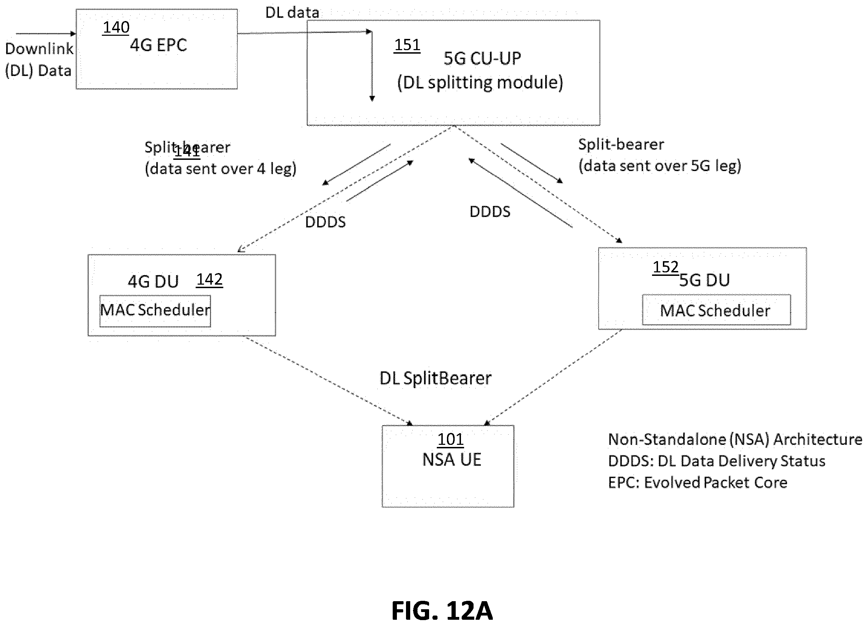

Figures 12A-12C show NSA / EN-DC Network Architecture with downlink data splitting. In the 5G Standalone (SA) architectures, 5G gNB 106 communicates with 5G Core (and not with 4G Evolved Packet Core 140). Similarly, in the 4G architecture, 4G eNB 116 communicates with 4G Evolved Packet Core (EPC) 140 and not with 5G Core.

The E-UTRA-NR Dual Connectivity (EN-DC) is a dominant form of the Non-Standalone (NSA) architecture. A 4G eNB (MeNB) as well as 5G gNB (En-gNB) connect with 4G EPC and 5G core is not used in this network architecture. As shown in FIG. 12A, the DL (downlink) data goes from 4G EPC 140 to 5G CU-UP 151 where it could be split across two different transmission paths (or network legs): 1) 5G CU-UP 151to 4G DU 142 to NSA UE and 2) 5G CU-UP 151 to 5G DU 152 to NSA UE, and combined again at the NSA UE 101. Flow control between CU-UP 151 and DU as specified in the previous section is run 1) between 5G DU 152 and 5G CU-UP 151, and 2) between 4G DU 142 and 5G CU-UP 151 in this architecture. Availability of multiple transmission paths between the user plane node in RAN and UE helps to improve transmission reliability, by duplicating the same PDCP PDU on to multiple paths, or increase data rate, by scheduling different data on different paths.

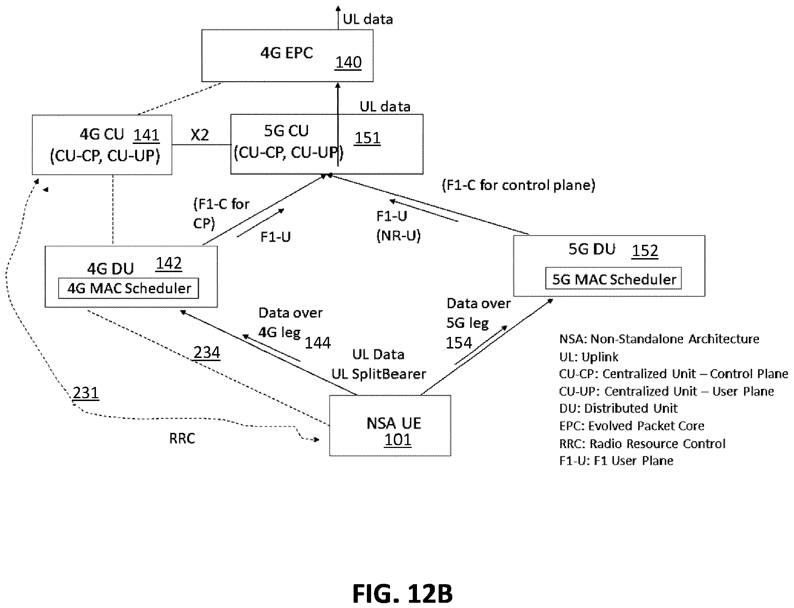

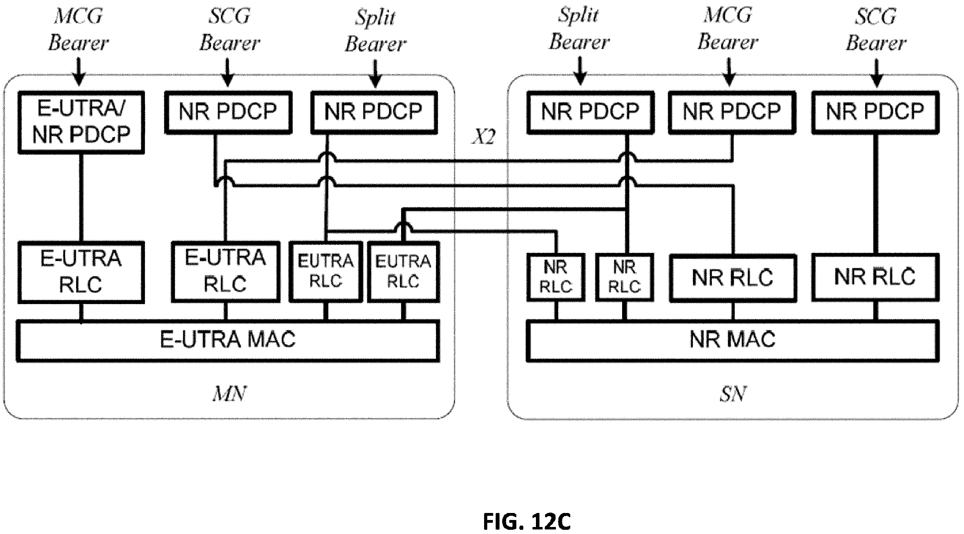

Figure 12B shows UL Split bearer in NSA Architecture. In this variant of the NSA Architecture, DL data from 4G EPC 140 is first sent to 4G CU-UP 141 where it is split across two transmission paths (or network legs): 1) 4G CU-UP 141 to 4G DU 142 to NSA UE 101 and 2) 4G CU-UP 141 to 5G DU 152 to UE 101, and then combined again at the NSA UE 101. For the UL split bearer in the NSA architecture, uplink data from the UE 101 towards the 5GDU 152/4G DU 142 is split at the UE 101. After splitting, some packets are sent on the 5G leg 154 and other on the 4G leg 144 of the network. Figure 12C shows logical architecture for a 5G split bearer.

*Description of Implementations*

Disclosed is an SN-terminated data radio bearer (DRB) in Non-Stand Alone (NSA) deployment configuration and advantageous splitting / routing policies to improve overall performance. The systems and methods detailed in the present specification are not limited to the particular example use cases, and are applicable to variety of use cases where downlink data needs to be split across two radio access technologies.

With the availability of two transmission paths, CU-UP is configured with a scheduling / splitting policy to determine how many PDCP PDUs need to be scheduled onto each of the paths. The DRBs carrying these PDCP PDUs from CU-UP can be mapped to RLC Acknowledged Mode (RLC AM), RLC Unacknowledged mode (RLC UM) or RLC Transparent Mode (RLC TM) at the DU. When PDCP PDUs are assigned Sequence Numbers (SNs), in the case when the DRB is mapped to RLC AM, the CU-UP is further required to configure the splitting policy such that out-of-sequence arrival of PDCP PDUs at the UE is minimized.

For example, a static policy can be implemented at the CU-UP through "leg-switching" by which the DL PDCP PDUs are scheduled either on the 5G radio interface leg or the 4G interface leg, but not both. At any time, the radio interface over which data is scheduled can be determined by the radio channel condition of one radio interface (e.g. NR), i.e., data is scheduled i) on NR radio interface if the NR channel performance is above a certain threshold, and ii) on LTE if the NR channel performance is below the threshold. This method can be sub-optimal as it only considers NR radio channel condition but not the LTE radio channel condition.

In an exemplary method, a dynamic splitting solution according to the present disclosure can be implemented at 5G CU-UP, 5G DU and 4G DU (or other equivalent nodes). Also disclosed is an interleaving approach at CU-UP to minimize PDCP reordering at CU-UP. Also disclosed is a Near-RT RIC-based approach for an exchange of relevant parameters via an E2 interface and a method that can be run at a Near-RT RIC server.

**Dynamic Data Routing or Splitting Method:**

**Example 1: Data routing / splitting when Radio Assistance Information is not available at CU-UP**

An exemplary implementation comprises controlling how much and what data, for instance which PDCP SNs, are transmitted on each of the 4G leg or 5G leg with the help of two methods: a Split Factor Method ("splitFactorMethod") and an SN Schedule Method ("snSchdMethod"). The trigger for Split Factor Method is the reception of DDDS message at the CU-UP from either the 4G or 5G leg, and the trigger for SN Schedule Method is the presence of any PDCP PDUs in the CU-UP queue.

A split factor is defined as the pair (X, Y), where X and Y are percentages of the individual PDCP Sequence Numbers (SNs) which are communicated over the 4G and 5G legs. However, a split factor (as part of splitFactorMethod) specifies the number of bytes which are to be transmitted on each leg, and not the actual identity of PDCP PDU SNs associated with the data. The second method, SN Schedule Method, decides the sequence of PDCP SNs to be scheduled on each leg.

Table 2 shows DDDS parameters and intermediate factors that are used by the splitting method to compute the final splitting factor .

Table 2

| Parameter in DDDS, communicated from DU to CU-UP for a DRB | Intermediate factors used in the computation of the final splitting factor |
|---|---|
| Desired buffer size (DBS) for the data radio bearer | dbsFactorLTE for LTE leg, dbsFactorNR for NR leg, |
| Desired Data Rate (DDR) | ddrFactorLTE for LTE leg, ddrFactorNR for NR leg |
| Number of lost NR-U Sequence Number ranges reported, Start of lost NR-U Sequence Number range, End of lost NR-U Sequence Number range; | MHQualitvFactorLTE for LTE leg, MHQualityFcatorNR for NR leg |
| Highest successfully delivered NR PDCP Sequence Number, Highest transmitted NR PDCP Sequence Number; Successfully delivered retransmitted NR PDCP Sequence Number, Retransmitted NR PDCP Sequence Number | qualityFactorLegLTE for LTE leg, qualityFactorLegNR for NR leg |

In Table 2, if any of the optional parameters is absent in the DDDS message, then the corresponding intermediate factor is not considered (or set to a value where it cannot impact the final splitting factor). When DDDS is received from any leg (e.g. NR or LTE), all the intermediate factors (for both the legs) and the final "split Factor" can be re-evaluated.

To compute the DBS factor for each leg:
An intermediate DBS related factor for LTE is computed as dbsFactorLTE = m * WDbs * (DBS indicated by LTE DU) / (DBS indicated by LTE DU + DBS indicated by NR DU). Here WDbs is the weight assigned to above factor and m is a scaling constant (such as 100).

Similarly, the intermediate DBS related factor for NR is computed as dbsFactorNR = m * WDbs * (DBS indicated by NR DU) / (DBS indicated by LTE DU + DBS indicated by NR DU) The DBS weight (WDbs) is the weight expressed in range 0-1, and is the weightage given to either a "dbsFactorLTE" or a "dbsFactorNR" in contribution to the overall split factor defined as "SplitFactorLTE" and "SplitFactorNR" below.

DDR Factor computations (ddrFactorLTE and ddrFactorNR defined in Table 2) are configured to operate on the received DDR on the respective leg.. If DDR is present in DDDS, the intermediate factor ddrFactorLTE or ddrFactorNR is computed as the ratio of DDR received in the respective leg to the sum of the latest DDRs received in DDDS from both the legs.

If DDR is present in DDDS message, the DDR related intermediate factor for LTE is computed as ddrFactorLTE = m * Wddr * (DDR from DDDS received from MeNB.DU)/((DDR from DDDS received from MeNB.DU plus the DDR as received from SgNB.DU). WDdr is the weight expressed in range 0-1, is the weightage given to either "ddrFactorLTE" or "ddrFactorNR" in contribution to the overall split factor below.

When DDDS is received (with DDR) at SgNB.CU-UP , ddrFactorNR is computed as ddrFactorNR = m * (Wddr) * (DDR received from the SgNB.DU)/((DDR received from SgNB.DU+ DDR as received from MeNB.DU) ). If DDR was not received from MeNB.DU then the component "DDR as received from MeNB.DU in the previous DDDS message" is considered as 0, in the denominator.

**Midhaul (and overall) quality related factors for 4G and 5G NR legs**

CU-UP computations employ various other parameters (from DDDS) as shown below to determine the quality of midhaul (i.e., midhaul between 5G CU-UP and 5G DU, and between 5G CU-UP and 4G DU) and the quality of each leg (i.e., 5G CU-UP - 4G DU - (air-interface) - UE, and 5G CU-UP - 5G DU - (air-interface) - UE).

Parameters from DDDS messages employed to determine the quality of midhaul include the Number of lost NR-U Sequence Number ranges reported. Parameters also include start of lost NR-U Sequence Number range and end of lost NR-U Sequence Number range. With these and other DDDS parameters, the percentage of packets getting lost over each midhaul interface can be estimated (i.e., between 5G CU-UP and 5G DU, and between 5G CU-UP and 4G DU).

Parameters from DDDS messages employed to determine quality of each leg (4G leg and 5G leg in the example scenario here) include:

Highest successfully delivered NR PDCP Sequence Number;
Highest transmitted NR PDCP Sequence Number;
Successfully delivered retransmitted NR PDCP Sequence Number; and
Retransmitted NR PDCP Sequence Number.

The parameters above can be employed to advantageously determine the quality of each leg.

**Exception case of Radio Link Failure/Radio Link resume**

When a "cause report" bit in the DDDS message is indicated as '1', this indicates the presence of "cause value" in the DDDS message. When the cause value is either "Radio Link Outage" or "DL Radio Link Outage", it means that the corresponding leg can no longer continue to transmit the DL PDCP Packets. In such scenarios, the remaining operative leg continues to transmit the packets from the PDCP PDU Queue. At the same time, SgNB.CUUP is unaware of the NRUP PDCP packets that are transmitted or yet-to-be-transmitted from the DU to UE in that corresponding leg (i.e., leg which is experiencing a radio link outage). In such cases, SgNB.CUUP transmits all the packets which have not been acknowledged from the leg reporting Radio Link Outage to the surviving leg. This can cause a few duplicate DL PDCP Packets at the UE side. However, those packets can be discarded based on the PDCP SNs at the UE. Additionally, based on the "Highest successfully delivered NR PDCP Sequence Number" (RLC AM) or "Highest transmitted NR PDCP Sequence Number" (RLC UM), SgNB.CUUP can decide which PDCP SNs are received successfully at UE, and thus can exclude those SNs while transmitting them on the surviving leg. Until "Radio Link resume" or "DL Radio Link resume" is reported as "cause value" in DDDS message from the leg that reported "Radio Link Outage" earlier, there is not any dynamic splitting taking place at SgNB.CUUP, and it transmits all the packets on the surviving leg only.

**Overall routing or splitting factor computation**

A final split factor is maintained per leg separately. It is computed whenever the intermediate factors are re-evaluated as explained in the above steps. The sum of all intermediate factors of a given leg "I" (leg-i) is denoted as Li. In the NSA example above, "i" takes values "LTE" and "5G NR". A total sum of all intermediate factors of both legs is denoted as L. The final split factor for a leg i is computed as the ratio of Li to L, expressed in percentage. Data can be split in proportion to the SplitFcatorLTE and SplitFactorNR across the 4G and the 5G NR legs. It will be noted that SplitFactorNR = 1 - SplitFactorLTE.

**Example 2: Data routing when Radio Assistance Information is available at CU-UP**

The radio assistance information provides the following characteristics about the DU-UE link to the CU-UP: Average CQI, Average HARQ Failure, Average HARQ Retransmissions, DL Radio Quality Index, UL Radio Quality Index, and Power Headroom Report as per 3GPP TS 38.425.

In the example method, CU-UP uses these parameters to compute a *Routing Metric* equation as shown below.

$$Routing\ Metric = MCSrate(AverageCQI) \times \frac{DL\ Radio\ Quality\ Index}{100} \times$$

$$F1(HARQ\ Failure\ ) \times F2(PL, UL\ Radio\ Quality\ Index)$$

In the *Routing Metric* equation, **MCSRate(AverageCQI)** is a function mapping average CQI to data rate It is based either on DDR reported or a predefined formula. Other factors like load of DU and BW (bandwidth) of link are also considered. If one uses DDR, it maps the Average CQI to a DDR value reported by the DU with lower or higher value of CQI resulting in a scaled value based on DDR. For example, for a UE average CQI of 7 is mapped to DDR value of 10 Mbps by **MCSRate** function. After a certain time, if the average CQI reported by DU is 15 then the MCSRate function maps it to a throughput of 25 Mbps. Another way is to implement the function is have CQI map to a predefined value based on BW and number of layers supported, and then scale the final rate based on DL Radio Quality Index reported by DU (second term in equation). For example, **AverageCQI** of 10 mapped to 100 Mbps, and DL Radio Quality Index is 50 then average throughput expected from the link is 100Mbps*50/100=50Mbps.

**F1(HARQ Failure)** is a function that maps HARQ Failure rate to appropriate weightage factor. In one exemplary implementation, the function can be defined as such that if HARQ failure is below a threshold (e.g.: 10%/15%), the value of function becomes 1; if the HARQ failure rate is higher than that the value of function reduces to zero. In another example embodiment, the function can be defined as

$$F1(HARQ\ Failure) = 1 - \frac{HARQ\ Failure\ rate}{100}$$

F2 (PL, UL Radio Quality Index) is a weightage function for path loss (PL) derived from Power Headroom reports and UL Radio link quality index. This function works in the following way. If PL is below a certain threshold, then this function takes value 1, implying UL can carry all the ACKs generated by RLC or higher layers. If the PL is above the threshold, this function decreases gradually to 0. This function signifies the capacity of UL link to carry a fraction of UL acknowledgements. This is considered for TCP kind of traffic where ACK is transmitted in reverse direction, and AM traffic bearers are used where RLC status PDUs are transmitted in the reverse direction. For UDP Traffic with UM bearer, value of this function is always 1.

The resulting **Routing Metric** is a measure of throughput the link can provide. Routing metrics of the two links are compared (between MeNB (4G) link and SgNB (5G) link), and CU-UP split the data based on their ratio.

In another example embodiment, CU-UP will combine this metric with other metrics, e.g., SplitFactorLTE and SplitFactorNR given in Example 1, or DBS and DDR with suitable weightage factor, to deciding the splitting factor across the different links. In an exemplary implementation, this computation is done in the RIC, where the RIC can combine this data with other data directly available from different DU, e.g., load information, number of active users, and bandwidth (BW), to determine the optimal split factor.

**Example 3: Routing and splitting at CU-UP to achieve in-sequence delivery at UE**

Splitting refers to deciding which PDCP SNs are to be transmitted on which transmission path. One consideration while splitting PDCP PDUs across LTE and NR transmission paths is to ensure that PDCP Sequence Numbers (SNs) arrive at UE in-sequence. Any out-of-order PDCP PDU arrival at UE triggers a reordering timer, followed by out-of-order delivery of PDCP PDUs to the higher layer upon timer expiry, leading to performance degradation. Thus, the CU-UP is configured ensure that it splits (i.e., interleaves) PDCP SNs among the two paths in such a way that reordering is minimized at the UE.

The design of a splitting method hinges on the CU-UP's ability to estimate one-way delays for each of the two transmission paths, where one-way delay for a given transmission path in DL is the delay from the time a PDCP PDU is transmitted on the path in question to the time it reaches the PDCP layer at UE.

3GPP TS 28.552 has standardized various RAN parts of DL packet delay measurements as follows:

1) Average delay DL air-interface : D1 (DL delay over-the-air interface),
2) Average delay in RLC sublayer of gNB-DU : D2 (DL delay on gNB-DU),
3) Average delay on F1-U: D3 (DL delay on F1-U),
4) Average delay DL in CU-UP: D4 (DL delay in CU-UP).

Among these delay counters, DU can communicate the delay component 1) in the ASSISTANCE INFORMATION DATA PDU to CU-UP (the field DL Delay DU Result). The delay counters 3) and 4) are computed in the CU-UP itself. However, as of the present disclosure, there is no standardized message by which DU can convey the delay counter 2) to CU-UP. In the present disclosure, two exemplary methods by which the delay counter 2) can be conveyed to CU-UP are described below.

**Exemplary Method 3A:** Disclosed is an implementation for the ASSISTANCE INFORMATION DATA PDU by defining a new field "DL Delay in DU" which carries the counter "DL delay on gNB-DU" (see, e.g., Table 2). The description of the field is as follows.

A DL Delay in DU field indicates a delay measured in DL at the corresponding node in milliseconds for the concerned DRB in the RLC layer. It is encoded as an Unsigned 32 binary integer value. The node hosting PDCP entity, if supported, is configured to use this information to calculate the one-way delay in DL for the concerned DRB from CU-UP to UE's PDCP layer.

   **Value range:** {0 ... $2^{32}$-1}.
   **Field length:** 4 octets

**Exemplary Method 3B:** Another example implementation for conveying DL delay in RLC layer to CU-UP is through CU-CP. That is, DU first communicates this delay to CU-CP over the F1-C interface followed by CU-CP relaying the same information over the E1 interface to CU-UP. This implementation requires F1-C and E1 interface messages be either appropriately modified or new messages be defined.

**Implementations for the F1-C interface.**

Disclosed is an implementation for the UE CONTEXT SETUP REQUEST and UE CONTEXT MODIFICATION REQUEST messages by including the Boolean parameter "RLC Delay Required" and "Periodicity for RLC Delay" for all the SRB/DRB for which RLC delay in DU is sought. The range for the parameter Periodicity for RLC Delay can be from 0 to 255 ms. To communicate willingness on the part of the DU to provide this information, the UE CONTEXT SETUP RESPONSE and UE CONTEXT MODIFICATION RESPONSE includes the Boolean variable "RLC Delay Inclusion". The value TRUE means DU can provide this information at the requested periodicity "Periodicity for RLC Delay".

To help DU send the requested information about the RLC delay, a F1-C message "DRB Stats" is defined and added, which includes the UE gNB-CU UE F1AP ID, gNB-DU UE F1AP ID and RLC Delay for as many DRBs for which DU agreed to send RLC delay information.

**Implementations for the E1 interface:** To have CU-CP relay the information carried in the DRB Stats F1-C message to CU-UP, the E1 interface includes an E1 message "F1-C CONTAINER", which encapsulates the "DRB Stats" message of the F1-C interface with appropriate meta information so that CU-UP knows which DRB of which UE the information is related to.

**Description:** With the availability of the above four delay counters, CU-UP can estimate one-way delay in the DL across the 4G leg as well as the 5G leg. The splitting method at the CU-UP considers the delay over the 4G and 5G legs, and interleaves packets (based on their sequence numbers) when sending to the UE so that most of the packets arrive in-order at the UE.

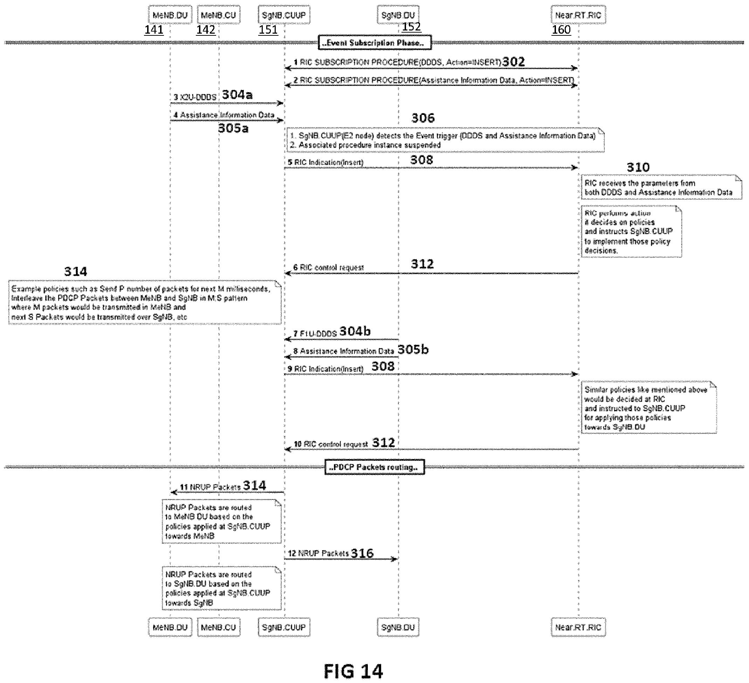

To explain, consider two PDCP SNs $i$ and $j$ such that $i < j$, and the longer network leg is defined to be that transmission path which has larger one-way-delay compared to the other transmission path. Likewise, shorter network leg is defined to be that transmission path which has smaller one-way-delay compared to the other transmission path. To minimize out-of-order PDCP SN arrival at UE's PDCP layer, the smaller SN $i$ is scheduled on the longer-leg while the larger SN $j$ is scheduled on the shorter-leg, as shown in the example below (see, e.g., Figure 14). In this example, $t_i$ and $t_j$ are defined to be the time-instants at which PDCP PDUs with SNs $i$ and $j$ are transmitted. In-sequence delivery at UE's PDCP requires that $t_i$ + (one-way delay on the longer-leg) < ($t_j$ + one-way delay on the shorter-leg). Equivalently, $t_j > t_i + \delta$, where $\delta$ = ("one-way delay on the longer-leg" minus "one-way delay on the shorter-leg") is the difference of one-way delays. In other words, whenever a SN $i$ is transmitted on the longer-leg, then any SN $j > i$ can be transmitted on the shorter-leg only after a delay of $\delta$ to ensure that SNs $i$ and $j$ arrive in-sequence at UE.

The method is illustrated using an example shown with respect to Figure 14. PDCP SNs are scheduled on the two paths alternatively, i.e., SNs 1, 3, 5, 7, ... on one path and SNs 2, 4, 6, 8, ... on the other path. Transmission for SN = 2 can start after a delay equal to (processing delay + transmission time + $\delta$).

Methods 3A and 3B described above work effectively when the splitting method is defined in CU-UP. However, following the O-RAN architecture, the splitting method can be also implemented in the RIC. According to the O-RAN architecture, the 3GPP-defined and O-RAN-compliant logical nodes O-CP, O-UP, and O-DU communicate with RIC via the E2 interface. Thus, the messages defined under Methods 3A and 3B can communicate the DL delay in RLC layer to O-UP, can also be added for the E2 interface.

| Bits | | | | | | | | Number of Octets |
|---|---|---|---|---|---|---|---|---|
| 7 | 6 | 5 | 4 | 3 | 2 | 1 | 0 | |
| PDU Type (=2) | | | | PDCP Dupl. Ind. | Assistance Info. Ind. | UL Delay Ind. | DL Delay Ind. | 1 |
| Spare | | | | | | | PDCP Duplication Activation Suggestion | 1 |
| Number of Assistance Information Fields | | | | | | | | 0 or 1 |
| Assistance Information Type | | | | | | | | 0 or (2*Number of Assistance Info Fields + sum of Number of octets for Radio Quality Assistance Information Fields) |
| Number of octets for Radio Quality Assistance Information Fields | | | | | | | | |
| Radio Quality Assistance Information | | | | | | | | |

| UL Delay DU Result | 0 or 4 |
|---|---|
| DL Delay DU Result | 0 or 4 |
| DL Delay in DU | 0 or 4 |

*Table 2 Enhanced PDU structure for ASSISTANCE INFORMATION DATA (PDU Type 2). The enhancement is in the form of inclusion of a new field DL Delay in DU encoded using either 0 or 4 bytes.*

**Example 4: RIC based data routing decisions for downlink split bearer**

Under heavy load conditions, CU-UP may not be able to handle the additional need of computational power for the dynamic splitting decision making methods. Under such circumstances, in an implementation, CU-UP can offload this processing to the RIC over the E2 interface. The RIC can make the intelligent decisions on the dynamic splitting and convey the dynamic splitting policies for the concerned bearer(s) towards CU-UP for the latter to apply, for the next defined T durations and/or for the next P packets towards either of the legs.

In some deployment scenarios, an operator may want to use CU/DU from a first vendor X, but do the decision-making for the splitting as provided by vendor Y. In this case, one can offload the splitting decision at the RIC and run the solution provided by vendor Y there.

In an exemplary method, SgNB.CUUP can communicate the relevant parameters to RIC over the E2 interface. The RIC performs the analysis, and the results are fed back to CU-UP. An implementation of the method for data routing in NSA architecture is described below with respect Figure 15.

**RIC Subscription procedure**

At block 302, when SgNB.CUUP is initialized, the subscription procedure is triggered with RIC. At block 304a and 306a, the MeNB sends DDDS and Assisted Radio Information respectively to SgNB-CUUP. At block 304b and 305b, the SgNB.DU MeNB send DDDS and Assisted Radio Information respectively to SgNB-CUUP. At block 306, SgNB.CUUP registers the DDDS and Assisted Radio Information procedure as event triggers in RIC. With this, whenever DDDS and Assisted Radio Information are received from either MeNB or from SgNB.DU, at block 308, this triggers an event towards RIC.

**Decision at RIC**

On reception of DDDS and/or Assistance Information data at SgNB.CUUP, either from MeNB or SgNB.DU, when the messages are received at SgNB.CUUP from either of the legs, at block 308, the message "RIC Indication(Insert)" is triggered towards Near-RT-RIC. At block 310 RIC processes the message and decides the policies to be applied to either or both of the legs. It can use one or more of the exemplary methods tdescribed in the previous sections. The example policies can be, e.g.:

    i. Policy1: Send P number of packets for next M milliseconds.
    ii. Policy2: Interleave the PDCP Packets between MeNB and SgNB.
    iii. in M:S pattern where M packets would be transmitted in MeNB and next S Packets would be transmitted over SgNB.
    iv. Policy3: Route entire packets towards SgNB for next M milliseconds.
    v. Policy4: Route entire packets towards MeNB for next N milliseconds.
    vi. Policies can be either individual or can be combination of a plurality of policies, for example, as described above.

**Communication of the above decision from RIC to CU-UP**

At block 312, the RIC sends "RIC control request" to SgNB.CUUP. At blocks 314 and 316, gNB.CUUP can respectively apply the policies on MeNB, SgNB, or both, depending on the indication received in "RIC Control Request".
While the implementations herein are described for NSA / EN-DC architectures, implementations are also applicable for other type of MR-DC (Multi-RAT - Dual Connectivity) architectures.
It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the invention.

**Claims**

1. A method comprising:

    obtaining a LTE Downlink Data Delivery Status (DDDS) at a gNB node centralized unit, gNB CU (151), via a 4G leg (144) from an LTE DU (142), MeNB DU;
    obtaining a NR DDDS at the gNB CU (151) via a 5G leg (154) from a SgNB DU (152);
    computing an intermediate factor for a final split factor, the intermediate factor being computed from Desired Buffer Size (DBS) parameters in the LTE DDDS message and the NR DDDS message;
    computing the final split factor or a scheduling method for dynamic splitting and routing of DL Packet Data Convergence Protocol (PDCP) Protocol Data Units PDUs on a 4G leg (144) and a 5G leg; and
    routing the PDCP PDUs on the 4G leg (144), the 5G leg (154), or both based on the split factor calculation.

2. The method of claim 1, further comprising:

    setting an LTE DBS for a data radio bearer (DRB) equal to the DBS in the LTE DDDS from the 4G DU (142) at the gNB CU (151);
computing the intermediate factor of a LTE DBS factor as m * a DBS weight * (the LTE Desired Buffer Size / (the LTE DBS + an NR DBS);
setting the NR DBS for a DRB equal to the DBS in the NR DDDS from the NR DU at the gNB CU (151);
computing the intermediate factor of an NR DBS factor as m * a DBS weight * (the NR Desired Buffer Size / (the LTE DBS + an NR DBS); and
computing the final split factor.

3. The method of claims 1 or 2, **characterized in that**, if there is data in a Packet Data Convergence Protocol (PDCP) Data Queue, the method further comprises:

   when routing DL Packet Data Convergence Protocol (PDCP) PDUs in the 5G leg (154), the DBS at an SgNB CU-UP (151) of the gNB CU (151) for the 5G leg (154) is updated using the last received DBS from the MeNB DU (141) and successfully transmitted bytes from the SgNB CU-UP (151) to the MeNB DU (141); and
   when routing DL PDCP PDUs in an NR Leg, the DBS at the SgNB CU-UP for NR is updated using a last received DBS from a SgNB DU (152) and the number of successfully transmitted bytes from the SgNB CU-UP to the SgNB DU (152)

4. The method according to any one of the above claims, **characterized in that** the method further comprises:
   computing a LTE DDR Factor ddrFactorLTE and a NR DDR factor ddrFactorNR are configured to operate on the received DDR on either or both of the 4G leg (144) or the 5G leg (154).

5. The method according to any one of the above claims, **characterized in that** the intermediate factor is computed as the ratio of DDR received in the respective 4G leg (144) and the 5G leg (154) to the sum of a latest of the DDRs received in DDDS from both the 4G leg (144) and the 5G leg (154).

6. The method according to claims 3-5, **characterized in that** the method further comprises:

   when the gNB CU (106) receives the LTE DDDS from the LTE DU (142), the DDR LTE Factor (ddrFactorLTE) is set to m * a DDR weight (WDdr) if the DDR is absent in the LTE DDDS message; and if DDR is present in LTE DDDS message, the DDR LTE factor is set to ddrFactorLTE = m * Wddr * /(the DDR from LTE DDDS + a DDR as received from a latest NR DDDS);
   when the gNB-CU (151) receives the NB DDDS from the SgNB DU (152), the DDR NR Factor (ddrFactorLTE) is set to m * a DDR weight (WDdr) if the DDR is absent in the NR DDDS message; and if DDR is present in NR DDDS message, the DDR NR factor is set to ddrFactorLTE = m * Wddr * /(the DDR from NR DDDS + a DDR as received from a latest LTE DDDS); and
   when the gNB CU (151) receives the LTE DDDS from the LTE DU (142), the DDR LTE Factor (ddrFactorLTE) is set to m * a DDR weight (WDdr) if the DDR is absent in the LTE DDDS message; and if DDR is present in LTE DDDS message, the DDR LTE factor is set to ddrFactorLTE = m * Wddr * /(the DDR from LTE DDDS + a DDR as received from a latest NR DDDS of the NR DDDS).

7. The method according to any one of the above claims, **characterized in that** the method further comprises:
   processing, at the gNB CU-UP (151) or a RAN Intelligent Controller, RIC (160), midhaul quality parameters in the DDDS to determine the quality of the 4G leg (144) and the 5G leg (154), the midhaul quality parameters comprising:

   a Number of lost NR-U Sequence Number ranges reported;
   a start of lost NR-U Sequence Number range and end of lost NR-U Sequence Number range;
   a Highest successfully delivered NR PDCP Sequence Number (RLC AM);
   a Highest transmitted NR PDCP Sequence Number (RLC UM);
   a Successfully delivered retransmitted NR PDCP Sequence Number; and
   a Retransmitted NR PDCP Sequence Number.

8. The method of claim 6, further comprising:

   when a cause report element in the DDDS message includes cause value including a Radio Link Outage, the Radio Link Outage indicating one of the a 4G leg (144) or the 5G leg (154) can no longer continue to transmit the DL PDCP packets, the remaining 4G leg (144) or 5G leg (154) that is an operative leg continues to transmit the packets from the PDCP PDU Queue, and where the gNB CU-UP (151) is unaware of the NR UP PDCP packets that are transmitted or yet-to-be-transmitted from the DU to UE in the leg experiencing the outage, the gNB CU-UP (151) transmits all the packets which have not been acknowledged from the leg reporting Radio Link Outage to the operative leg;

determining, by gNB CU-UP (151) or the RIC, which PDCP SNs are received successfully at UE using the Highest successfully delivered NR PDCP Sequence Number parameter, the Highest transmitted NR PDCP Sequence Number parameter, or both;

excluding PDCP SNs that are received successfully at UE when the gNB CU-UP (151) decides which PDCP SNs are received successfully at UE and while the gNB CU-UP (151) transmits the PDCP SNs on the operative leg; and

transmitting all the packets on only the operative leg until the DDDS message includes cause value including a Radio Link resume.

9. The method any one of the above claims, **characterized in that** the method further comprises:
computing and maintaining a final Split Factor per 4G leg (144) and 5G leg (154).

10. The method of claim 9, comprising;

recomputing the intermediate split factors;
calculating the sum of all the intermediate factors of a given leg Li, where i takes values "LTE" and "5G NR" and the total sum of all intermediate factors of both legs is denoted as L; and
computing the final split factor for a leg-i as the ratio of Li to L;
splitting the data transmission in proportion to an LTE Split Factor (SplitFcatorLTE) and a NR Split Factor (SplitFactorNR) across the 4G leg (144) and 5G leg (154).

11. A method comprising:

calculating a Routing Metric as a measure of throughput a 4G leg (144) link or a 5G leg (154) link can provide, wherein the routing metric includes a Routing Metric ratio for the throughput measure of the 4G leg (144) link or the 5G leg (154) link,
dynamically splitting, by a gNB node centralized unit user plane, gNB CU-UP (151), Protocol Data Units PDUs across the 4G leg (144) link or 5G leg (154) link based on the Routing Metric ratio.
wherein the Routing Metric is preferably calculated as:

Routing Metric= MCSrate(AverageCQI) $\times$ (DL Radio Quality Index)/ $100 \times$ F1(HARQ Failure ) $\times$ F2(PL,UL Radio Quality Index);
wherein if the *F1(HARQ failure)* is below a threshold, the value of function becomes 1; if the HARQ failure rate is higher than the threshold, the value of function reduces to zero;
wherein the *HARQ failure* is preferably calculated as: *F1(HARQ Failure)=1-(HARQ Failure rate)/100;* and
wherein the gNB CU-UP (151) or a RIC (160) computes the Routing Metric with the split factor, a DBS factor, a DBS weight factors, a DDR factor, and a DDR weight factor, to decide an optimal split factor splitting across the 4G leg (144) link and 5G leg (154) link.

12. A method comprising:

calculating a DU delay at a gNB centralized unit user plane, gNB CU-UP (151), or a RAN Intelligent Controller, RIC (160), with one or more DL Delay counters; and
factoring DU delay for a policy to be executed by the gNB when splitting a packet transmission over a 4G leg (144) and a 5G leg (154);
calculating the DU delay at the gNB CU-UP (151), wherein a DU message to convey a DL delay at the DU is relayed from the DU to a CU-CP via an FI-C interface, and from the CU-CP to the gNB CU-UP (151) over an E1 interface;
wherein a DU message for assistance information data includes a DL Delay DU Result to convey a DL delay at the DU to the gNB CU-UP (151);
wherein a UE CONTEXT SETUP REQUEST message and a UE CONTEXT MODIFICATION REQUEST message include Boolean parameters for "RLC Delay Required", "Periodicity for RLC Delay", and "RLC Delay Inclusion" for all the Signaling Radio Bearers (SRB) and Data Radio Bearers (DRB) for which RLC delay in DU is sought;
an FI-C message includes a DRB Stats field that is configured to include UE gNB-CU UE F1AP ID, gNB-DU UE F1AP ID and RLC Delay for as many DRBs for which the DU agreed to send RLC delay information; and an E1 interface message includes an F1-C Container field which encapsulates the DRB Stats field data.

13. The method of claim 12 further comprising:

estimating, by the gNB CU-UP (151) or the RIC, a one-way delay in the DL across the 4G leg (144) and the 5G leg (154); and

factoring the estimated delay when splitting the packet transmission over 4G and 5G leg (154)s by interleaving packets based on PDCP SNs when transmitting the packets to a UE (101) so that the of the packets arrive substantially in order at the UE (101);

wherein the method preferably comprises, to minimize out-of-order PDCP SN arrival at a UE's Packet Data Convergence Protocol (PDCP) layer, a smaller SN is scheduled on a longer of the 4G leg (144) or 5G leg (154) while a larger SN is scheduled on the shorter of the 4G leg (144) or 5G leg (154).

14. The method of claims 12 or 13, further comprising:

calculating a DU delay at the RIC (160) with one or more DL Delay counters sent via an E2 interface;

identifying one or more policies to be execute by the gNB CU-UP (151); and

sending a control request from the RIC to the gNB CU-UP (151) to execute the policy on the 4G leg (144), the 5G leg (154), or both.

15. The method of any of claims 12-14, wherein the policy for execution is one or more of:

Policy1: send P number of packets for next M milliseconds;

Policy2: interleave the PDCP Packets between MeNB (116) and SgNB (106) in M:S pattern where M packets would be transmitted in MeNB and next S Packets would be transmitted over SgNB (105);

Policy3: route entire packets towards SgNB (106) for next M milliseconds; and

Policy4: route entire packets towards MeNB (116) for next N milliseconds.

100

**NR UE (101)**
Circuitry (102)

**NR gNB (106)**
Circuitry (107)

Uu Interface (120)

**Programmable Circuit (102A)**
Processor (103)
Memory (104)
Module (105)

**Programmable Circuit (107A)**
Processor (108)
Memory (109)
Module (110)

**Storage Device (130)**

**FIG. 1**

| UE | 101 | | gNB | 106 |
|---|---|---|---|---|
| SDAP | | ←→ | SDAP | |
| PDCP | | ←→ | PDCP | |
| RLC | | ←→ | RLC | |
| MAC | | ←→ | MAC | |
| PHY | | ←→ | PHY | |

**FIG. 2**

| UE | 101 | | gNB | 106 | | AMF | |
|---|---|---|---|---|---|---|---|
| NAS | | ←————————————————————————————→ | | | | NAS | |
| RRC | | ←———→ | RRC | | | | |
| PDCP | | ←———→ | PDCP | | | | |
| RLC | | ←———→ | RLC | | | | |
| MAC | | ←———→ | MAC | | | | |
| PHY | | ←———→ | PHY | | | | |

**FIG. 3**

5GC

NG    NG

NG-RAN  <u>151</u>

gNB

<u>106</u>

Xn-C

gNB

<u>106</u>

gNB-CU

<u>151</u>

F1    F1

<u>152</u>

gNB-DU

<u>152</u>

gNB-DU

**FIG. 4A**

**FIG. 4B**

FIG. 5

FIG. 6

EP 4 456 602 A2

**FIG. 7**

**FIG. 8A**

Legend
— 3GPP interfaces
— O-RAN
--- interfaces
For future

**O-RAN OAM Architecture**

**FIG. 8B**

EP 4 456 602 A2

**FIG. 9A**

UPF (as part of 5G core network)

One GTP-U tunnel per
PDU session between
UPF and CU-UP

CU-UP:
QoS flows mapped to
DRBs (SDAP layer)

PDU Session

CU-UP:
SDAP,
PDCP

One GTP-U tunnel per
DRB between CU-UP and DU

DRB1      DRB2

GTP-U tunnel      GTP-U tunnel

DU:
RLC,
MAC,
Upper Physical layer

DU

**FIG. 9B**

FIG. 9C

**FIG. 10A**

| node hosting NR PDCP | | corresponding node |
|---|---|---|

DL USER DATA →

**FIG. 10B**

| node hosting NR PDCP | | corresponding node |
|---|---|---|

← DL DATA DELIVERY STATUS

**FIG. 10C**

| node hosting NR PDCP | | corresponding node |
|---|---|---|

← ASSISTANCE INFORMATION DATA

**FIG. 11A**

AMF/UPF

AMF/UPF

5GC

NG

NG

NG

NG

NG

NG

NG

NG

gNB

gNB

Xn

NG-RAN

Xn

Xn

ng-eNB

Xn

ng-eNB

EP 4 456 602 A2

38

**FIG. 11B**

Downlink
(DL) Data

**140**
**4G EPC**

DL data

**151**     **5G CU-UP**
(DL splitting module)

Split-bearer
**141**
(data sent over 4 leg)

Split-bearer
(data sent over 5G leg)

DDDS

DDDS

4G DU   **142**

MAC Scheduler

**152** 5G DU

MAC Scheduler

DL SplitBearer

**101**
**NSA UE**

Non-Standalone (NSA) Architecture
DDDS: DL Data Delivery Status
EPC: Evolved Packet Core

**FIG. 12A**

FIG. 12B

EP 4 456 602 A2

**FIG. 12C**

**FIG. 13**

MeNB.DU 141  MeNB.CU 142  SgNB.CUUP 151  SgNB.DU 152  Near.RT.RIC 160

..Event Subscription Phase..

1 RIC SUBSCRIPTION PROCEDURE(DDDS, Action=INSERT) 302

2 RIC SUBSCRIPTION PROCEDURE(Assistance Information Data, Action=INSERT)

3 XfU-DDDS 304a

4 Assistance Information Data
305a

306
1. SgNB.CUUP(E2 node) detects the Event trigger (DDDS and Assistance Information Data)
2. Associated procedure instance suspended

5 RIC Indication(Insert) 308

310
RIC receives the parameters from both DDDS and Assistance Information Data

RIC performs action
it decides on policies
and instructs SgNB.CUUP
to implement those policy
decisions.

6 RIC control request 312

314
Example policies such as Send P number of packets for next M milliseconds,
Interleave the PDCP Packets between MeNB and SgNB in M:S pattern
where M packets would be transmitted in MeNB and
next S Packets would be transmitted over SgNB, etc

7 FfU-DDDS 304b

8 Assistance Information Data 305b

9 RIC Indication(Insert) 308

Similar policies like mentioned above
would be decided at RIC
and instructed to SgNB.CUUP
for applying those policies
towards SgNB.DU

10 RIC control request 312

..PDCP Packets routing..

11 NRUP Packets 314

NRUP Packets are routed
to MeNB.DU based on the
policies applied at SgNB.CUUP
towards MeNB

12 NRUP Packets 316

NRUP Packets are routed
to SgNB.DU based on the
policies applied at SgNB.CUUP
towards SgNB

MeNB.DU  MeNB.CU  SgNB.CUUP  SgNB.DU  Near.RT.RIC

**FIG 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 23.501 V 18.1.0,* 05 April 2023
- *3GPP TS 28.552_ V18.2.0,* 30 March 2023
- *3GPP TS 38.300 V 17.4.0,* 28 March 2023
- *3GPP TS 38.401 V 17.4.0,* 03 April 2023
- *3GPP TS 38.501 V 18.1.0,* 05 April 2023
- *3GPP TS 38.425 17.3.0,* 03 April 2023